# EUROPEAN PATENT APPLICATION

(11) **EP 4 067 907 A1**
(43) Date of publication of application: **05.10.2022**
(21) Application number: 21795526.9
(22) Date of filing: 30.03.2021
(51) Int. Cl.: G01N 35/00, B01L 3/00

(54) **DETECTION CHIP AND DETECTION SYSTEM**

(30) Priority: 30.04.2020 CN 202010367824
(71) Applicant: BOE Technology Group Co., Ltd., Beijing 100015 (CN)
(72) Inventor: ZHAO, Jing, Beijing 100176 (CN); ZHANG, Yufan, Beijing 100176 (CN); YUAN, Chungen, Beijing 100176 (CN); AN, Guangming, Beijing 100176 (CN)
(74) Representative: Maiwald Patent- und Rechtsanwaltsgesellschaft mbH
(86) International application number: PCT/CN2021/084007
(87) International publication number: WO 2021/218537

(57) **Abstract**

A detection chip (10) and a detection system (60). The detection chip (10) comprises a sample adding opening (110) and at least one detection branch structure (120); each of the at least one detection branch structure (120) comprises a detection portion (140); the detection portion (140) comprises a detection recess (141) and a reaction reagent (150), the detection recess (141) being in communication with the sample adding opening (110), the reaction reagent (150) being accommodated in the detection recess (141), and the detection portion (140) is configured to allow optical detection on the reaction reagent (150) in the detection recess (141). The detection chip (10) can help to achieve automatic detection, and can help to achieve a portable detection device.

## Description

The present application claims the priority of Chinese patent application No. 202010367824.8, filed on April 30, 2020, the entire disclosure of which is incorporated herein by reference as part of the disclosure of this application.

### TECHNICAL FIELD

Embodiments of the present disclosure relate to a detection chip and a detection system.

### BACKGROUND

Microfluidic chip technology integrates basic operation units of sample preparation, reaction, separation, detection, or the like involved in the fields of biology, chemistry, medicine, or the like into a chip with a micrometer-scale microchannel to automatically complete the entire process of reaction and analysis. The chip used in this process is referred to as a microfluidic chip, and may also be referred to as a lab-on-a-chip. Microfluidic chip technology has advantages of small sample consumption, fast analysis speed, being easy to be made into portable instruments, being suitable for instant and on-site analysis, or the like, and has been widely used in various fields such as biology, chemistry, and medicine.

### SUMMARY

At least one embodiment of the present disclosure provides a detection chip, and the detection chip comprises a sample adding opening and at least one detection branch structure; each of the at least one detection branch structure comprises a detection portion, the detection portion comprises a detection groove and a reaction reagent, the detection groove is in connection with the sample adding opening, and the reaction reagent is contained in the detection groove; and the detection portion is configured to allow optical detection to be performed on the reaction reagent in the detection groove.

For example, in the detection chip provided by at least one embodiment of the present disclosure, each of the at least one detection branch structure further comprises a guiding channel, the guiding channel comprises a first end and a second end, the first end of the guiding channel is in connection with the sampling adding opening, and the second end of the guiding channel is in connection with the detection groove, so as to allow the detection groove to be in connection with the sample adding opening through the guiding channel.

For example, the detection chip provided by at least one embodiment of the present disclosure further comprises: a first substrate, comprising a first surface, wherein the sample adding opening is a through hole in the first substrate, and the guiding channel and the detection groove are provided on the first surface of the first substrate; and a second substrate, being stacked on the first surface of the first substrate and allowing the optical detection to be performed at a position corresponding to the detection groove.

For example, in the detection chip provided by at least one embodiment of the present disclosure, each of the at least one detection branch structure further comprises a water-absorbing film, and the water-absorbing film is contained in the detection groove and at least partially overlaps with the reaction reagent in a direction perpendicular to the first substrate.

For example, in the detection chip provided by at least one embodiment of the present disclosure, the water-absorbing film is provided on a side of the reaction reagent away from the second substrate.

For example, in the detection chip provided by at least one embodiment of the present disclosure, a liquid storage capacity of the water-absorbing film is 10µL∼50µL.

For example, in the detection chip provided by at least one embodiment of the present disclosure, the detection portion further comprises a guiding groove at a periphery of the detection groove, and the guiding groove is in connection with the detection groove; and a height of at least a part of the guiding groove is smaller than a height of the detection groove.

For example, in the detection chip provided by at least one embodiment of the present disclosure, the guiding groove comprises a guiding wall in a sloped shape, and one end of the guiding wall is in contact with a side surface of the detection groove.

For example, in the detection chip provided by at least one embodiment of the present disclosure, a longitudinal section of the guiding groove and a longitudinal section of the detection groove are in a stepped shape as a whole.

For example, in the detection chip provided by at least one embodiment of the present disclosure, the guiding groove at least partially surrounds the detection groove.

For example, in the detection chip provided by at least one embodiment of the present disclosure, a height of the detection groove is 0.2mm∼5mm, a difference between a maximum height of the guiding groove and a height of the detection groove is 0.1mm∼1mm, and a width of the guiding groove is 0.1mm∼1mm.

For example, in the detection chip provided by at least one embodiment of the present disclosure, the detection portion further comprises a liquid storage through hole, and the liquid storage through hole penetrates the first substrate and is in connection with the detection groove.

For example, in the detection chip provided by at least one embodiment of the present disclosure, the liquid storage through hole is in connection with a center of the detection groove.

For example, in the detection chip provided by at least one embodiment of the present disclosure, a diameter of the liquid storage through hole is 0.2mm∼5mm, and a ratio of a depth of the liquid storage through hole to a height of the detection groove is 0.5:1-10:1.

For example, in the detection chip provided by at least one embodiment of the present disclosure, a height of the guiding channel is 0.1mm∼1.5mm, and a width of the guiding channel is 0.1mm∼2mm.

For example, in the detection chip provided by at least one embodiment of the present disclosure, a ratio of a height of the guiding channel to a width of the guiding channel is 1:1∼10:1.

For example, in the detection chip provided by at least one embodiment of the present disclosure, an inner wall of the guiding channel is hydrophilic.

For example, in the detection chip provided by at least one embodiment of the present disclosure, the at least one detection branch structure comprises a plurality of detection branch structures, and the plurality of detection branch structures are uniformly distributed along a periphery of the sample adding opening.

For example, in the detection chip provided by at least one embodiment of the present disclosure, the sample adding opening comprises a first main body and a first protrusion protruding from the first main body towards the guiding channel, and the first protrusion is in connection with the guiding channel.

For example, in the detection chip provided by at least one embodiment of the present disclosure, a diameter of the first main body is 1mm∼10mm.

For example, in the detection chip provided by at least one embodiment of the present disclosure, the reaction reagent comprises a reaction film and/or a block-shaped reaction reagent.

For example, in the detection chip provided by at least one embodiment of the present disclosure, the reaction film is in a compressed state in a thickness direction.

For example, in the detection chip provided by at least one embodiment of the present disclosure, a ratio of a thickness of the reaction film in a relaxed state to a height of the detection groove is 1:1∼1:0.5.

For example, in the detection chip provided by at least one embodiment of the present disclosure, the reaction film is in a circle shape, or the reaction film is in a polygonal shape, and one corner of the polygonal shape is directly connected with the second end of the guiding channel.

For example, in the detection chip provided by at least one embodiment of the present disclosure, the reaction film comprises a film main body and a second protrusion protruding from the film main body towards the guiding channel, and at least a part of the second protrusion is in the guiding channel; and a shape of the film main body and a shape of the detection groove are identical, and the film main body and the detection groove are in a circle shape.

For example, in the detection chip provided by at least one embodiment of the present disclosure, the reaction film is in a rhombus shape.

For example, in the detection chip provided by at least one embodiment of the present disclosure, a diameter of the detection groove is 3mm∼15mm, and a diameter of the reaction film is equal to or smaller than the diameter of the detection groove.

For example, in the detection chip provided by at least one embodiment of the present disclosure, the second substrate has a detection through hole at a position corresponding to the detection groove.

For example, in the detection chip provided by at least one embodiment of the present disclosure, the second substrate is opaque; or the detection chip further comprises a light-shielding layer, and the light-shielding layer covers a surface of the second substrate away from and/or close to the first substrate and exposes the detection through hole.

For example, in the detection chip provided by at least one embodiment of the present disclosure, a diameter of the detection through hole is 2mm∼10mm.

For example, in the detection chip provided by at least one embodiment of the present disclosure, a material of the first substrate comprises one or more of polymethyl methacrylate, polystyrene, and polycarbonate.

For example, in the detection chip provided by at least one embodiment of the present disclosure, a material of the second substrate comprises one or more of polymethyl methacrylate, polystyrene, polycarbonate, and polyethylene terephthalate.

For example, in the detection chip provided by at least one embodiment of the present disclosure, the first substrate and the second substrate are combined by bonding, welding, adhering, or clamping.

For example, the detection chip provided by at least one embodiment of the present disclosure further comprises an adhering layer, the adhering layer is between the first substrate and the second substrate and is configured to combine the first substrate and the second substrate, and the adhering layer comprises an opening corresponding to the detection groove.

For example, in the detection chip provided by at least one embodiment of the present disclosure, the reaction reagent comprises a matrix material and a detection reagent distributed in the matrix material, and the matrix material comprises a glass fiber, a cotton fiber, or a composite fiber of the glass fiber and the cotton fiber.

For example, the detection chip provided by at least one embodiment of the present disclosure further comprises: a first substrate, comprising a first surface, wherein the sample adding opening is a through hole in the first substrate, and the guiding channel and the detection groove are provided on the first surface of the first substrate; and a second substrate, being stacked on the first surface of the first substrate and comprising a detection through hole at a position corresponding to the detection groove to allow the optical detection to be performed through the detection through hole, wherein the at least one detection branch structure comprises a plurality of detection branch structures, and the plurality of detection branch structures are uniformly distributed along a periphery of the sample adding opening.

For example, the detection chip provided by at least one embodiment of the present disclosure further comprises: a first substrate, comprising a first surface and a second surface which are opposite to each other, wherein the sample adding opening is a through hole in the first substrate, the detection groove is provided on the first surface of the first substrate, and the guiding channel is provided on the second surface of the first substrate; a second substrate, being stacked on the first surface of the first substrate and allowing the optical detection to be performed at a position corresponding to the detection groove; and a third substrate, being stacked on the second surface of the first substrate and sealing the sample adding opening and the guiding channel.

For example, the detection chip provided by at least one embodiment of the present disclosure further comprises: a first substrate, comprising a first surface, wherein the sample adding opening, the guiding channel, and the detection groove are provided on the first surface of the first substrate, and the sample adding opening is a non-through hole in the first substrate; and a second substrate, wherein the second substrate is stacked on the first surface of the first substrate, exposes the sample adding opening, and allows the optical detection to be performed at a position corresponding to the detection groove.

For example, the detection chip provided by at least one embodiment of the present disclosure further comprises an optical calibration branch structure, the optical calibration branch structure comprises an optical path detection region, and the optical path detection region is configured to perform optical calibration.

For example, the detection chip provided by at least one embodiment of the present disclosure further comprises a sample adding protrusion, the sample adding protrusion protrudes from the first surface of the first substrate in a direction away from the second substrate, and one end of the sample adding protrusion is connected with the sample adding opening.

For example, in the detection chip provided by at least one embodiment of the present disclosure, the sample adding protrusion comprises a conical cavity, a volume of the conical cavity is 50µL∼200µL, and a height of the conical cavity protruding from the first substrate is 1mm∼20mm; and the conical cavity comprises a first end and a second end which are opposite to each other, the first end is connected with the sample adding opening, a diameter of the first end is 0.5mm∼5mm, and a diameter of the second end is 1mm∼20mm.

For example, in the detection chip provided by at least one embodiment of the present disclosure, the first substrate comprises a first notch, the second substrate comprises a second notch corresponding to the first notch, and the first notch and the second notch are configured to fix the detection chip.

At least one embodiment of the present disclosure further provides a detection system, comprising: the detection chip according to any one of the embodiments of the present disclosure; and a detection device, configured to detect the reaction reagent in the detection groove through the detection portion.

For example, in the detection system provided by at least one embodiment of the present disclosure, the detection device comprises: a light source, configured to emit light to the reaction reagent; and a photoelectric detection device, configured to receive light emitted from the light source and reflected by the reaction reagent.

### BRIEF DESCRIPTION OF THE DRAWINGS

In order to clearly illustrate the technical solutions of the embodiments of the present disclosure, the drawings of the embodiments will be briefly described in the following. It is obvious that the described drawings are only related to some embodiments of the present disclosure and thus are not limitative to the present disclosure.
FIG. 1A and FIG. 1B are respectively a front perspective view and a back perspective view of a detection chip provided by at least one embodiment of the present disclosure;
FIG. 2A and FIG. 2B are respectively exploded views of the detection chip illustrated in FIG. 1A and FIG. 1B;
FIG. 3A and FIG. 3B are respectively a front perspective view and a back perspective view of a first substrate of the detection chip illustrated in FIG. 1A and FIG. 1B;
FIG. 4 is a schematic planar diagram of a first surface of a first substrate of the detection chip illustrated in FIG. 1A and FIG. 1B;
FIG. 5 is a schematic planar diagram of a second substrate of the detection chip illustrated in FIG. 1A and FIG. 1B;
FIG. 6 is a schematic structural diagram of a reaction film of the detection chip illustrated in FIG. 1A and FIG. 1B;
FIG. 7A and FIG. 7B are respectively a front perspective view and a back perspective view of another detection chip provided by at least one embodiment of the present disclosure;
FIG. 8 is an exploded view of the detection chip illustrated in FIG.7A and FIG. 7B;
FIG. 9A and FIG. 9B are respectively a front perspective view and a back perspective view of a first substrate of the detection chip illustrated in FIG. 7A and FIG. 7B;
FIG. 10 is a schematic planar diagram of a first surface of a first substrate of the detection chip illustrated in FIG. 7A and FIG. 7B;
FIG. 11 is an exploded view of still another detection chip provided by at least one embodiment of the present disclosure;
FIG. 12 is a schematic structural diagram of a first substrate of the detection chip illustrated in FIG. 11;
FIG. 13A is a schematic diagram of a partial structure of the first substrate of the detection chip illustrated in FIG. 12;
FIG. 13B is a schematic cross-sectional structural diagram taken along a line A-A' in FIG 13A;
FIG. 13C is a schematic cross-sectional structural diagram taken along a line B-B' in FIG 13A;
FIG. 14 is an exploded view of still another detection chip provided by at least one embodiment of the present disclosure;
FIG. 15A and FIG. 15B are exploded views of still another detection chip provided by at least one embodiment of the present disclosure;
FIG. 16 is an exploded view of still another detection chip provided by at least one embodiment of the present disclosure; and
FIG. 17 is a schematic diagram of a detection system provided by at least one embodiment of the present disclosure.

### DETAILED DESCRIPTION

In order to make objects, technical details and advantages of the embodiments of the present disclosure apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments of the present disclosure herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect," "connected," "coupled," etc., are not intended to define a physical connection or mechanical connection, but may include an electrical connection, directly or indirectly. "On," "under," "right," "left," and the like are only used to indicate relative position relationship, and when the position of the object which is described is changed, the relative position relationship may be changed accordingly.

In the process of designing the microfluidic chip, the inventor hopes to integrate as many functions of analysis and detection on the chip as possible, so as to reduce the dependence of the chip on external operations, thereby achieving automation and integration. For example, the sampling component and analysis and detection component of the microfluidic chip may be integrated, which may achieve the automation of the detection process through the design of the structure, thereby reducing the technical requirements for operators, reducing human errors, and making the obtained detection data more accurate.

At least one embodiment of the present disclosure provides a detection chip, the detection chip includes a sample adding opening and at least one detection branch structure, each of the at least one detection branch structure includes a detection portion, the detection portion includes a detection groove and a reaction reagent, the detection groove is in connection with the sample adding opening, the reaction reagent is contained in the detection groove, and the detection portion is configured to allow optical detection to be performed on the reaction reagent in the detection groove.

The detection chip provided by at least one embodiment of the present disclosure can integrate multiple basic structural units or components for sample detection on the same chip, and complete the entire process of sample analysis and detection through active control or capillary action, thereby achieving automatic and integrated detection process. Therefore, the use of the above detection chip can reduce possible human errors in the detection process and improve the accuracy of the detection data, and at the same time, the overall shape of the detection chip can be thinned or miniaturized, which may facilitate the realization of a portable detection system.

In the following, the detection chip and the detection system provided by the present disclosure will be described through several specific embodiments.

In some embodiments of the present disclosure, each of the at least one detection branch structure further includes a guiding channel, the guiding channel has a first end and a second end, the first end of the guiding channel is in connection with the sample adding opening, and the second end of the guiding channel is in connection with the detection groove, so that the detection groove can be in communication with the sample adding opening through the guiding channel.

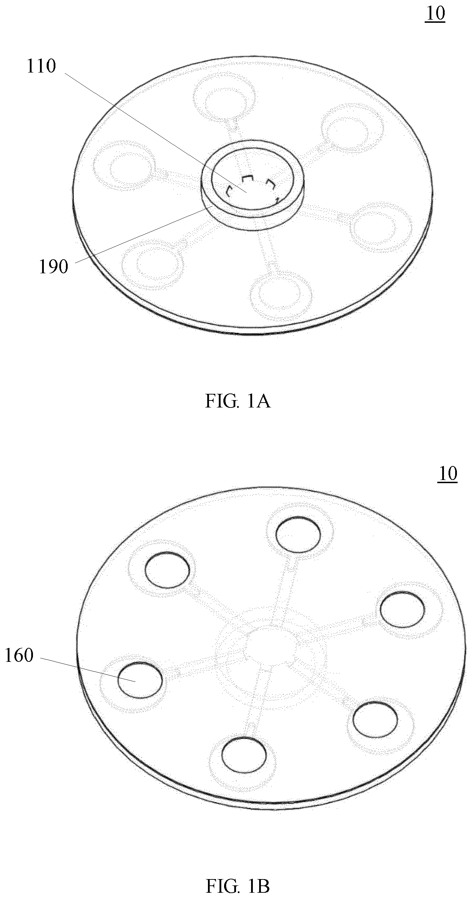

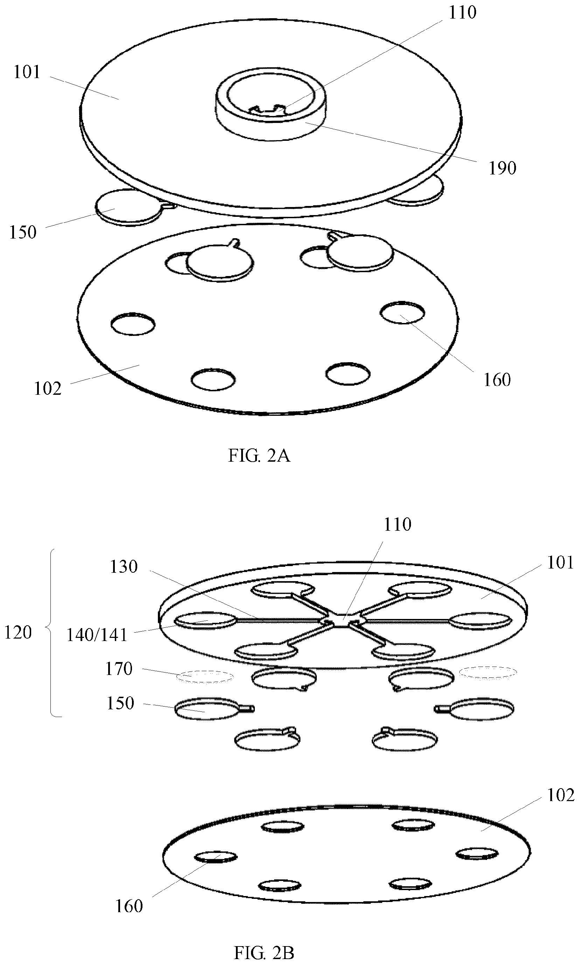

FIG. 1A and FIG. 1B are respectively a front perspective view and a back perspective view of a detection chip provided by at least one embodiment of the present disclosure. FIG. 2A and FIG. 2B are respectively exploded views, that is, breakdown views, of the detection chip illustrated in FIG. 1A and FIG. 1B. FIG. 1A and FIG. 2A are top views of the detection chip, showing the structure viewed from the front of the detection chip. FIG. 1B and FIG. 2B are bottom views of the detection chip, showing the structure viewed from the back of the detection chip.

For example, as illustrated in FIG. 1A to FIG. 2B, the detection chip 10 includes a sample adding opening 110 and at least one detection branch structure 120, such as a plurality of detection branch structures 120. The figure shows six detection branch structures 120 as an example for introduction. The sample adding opening 110 is used to add a sample to be detected, such as breast milk, body fluids, blood, or other samples to be detected. The plurality of detection branch structures 120 are uniformly distributed along the periphery of the sample adding opening 110, so that the plurality of detection branch structures 120 can implement detection functions independently.

For example, each of the plurality of detection branch structures 120 includes a guiding channel 130 and a detection portion 140. The guiding channel 130 has a first end and a second end, and the first end is in connection with the sample adding opening 110. The detection portion 140 includes a detection groove 141 and a reaction reagent 150, the detection groove 141 is in connection with the second end of the guiding channel 130, and the reaction reagent 150 is contained in the detection groove 141. The detection portion 140 is configured to allow optical detection to be performed on the reaction reagent 150 in the detection groove 141.

For example, in some embodiments, the reaction reagent 150 may be in a film shape, as illustrated in FIG. 1A to FIG. 2B, that is, a reaction film; or, in some embodiments, the reaction reagent 150 may be in the form of a block or powder, for example, the reaction reagent 150 may be a frozen-dried reagent in the form of a block or powder, etc.; or, in some embodiments, for example, in the case that the detection chip includes a plurality of detection branch structures, it may also be that the reaction reagent contained in one or some of the detection grooves is a film-shaped reaction film, and the other detection groove may contain a reaction reagent that is different from the film-shaped reaction film, such as a reaction reagent in the form of a block or powder; and the embodiments of the present disclosure are not limited in this aspect.

In the following, taking the reaction reagent 150 as a reaction film (that is, the reaction film 150) as an example, the detection chip provided by the embodiments of the present disclosure will be described. It should be noted that the embodiments of the present disclosure include but are not limited to this.

For example, in some embodiments, the detection chip further includes an optical calibration branch structure, the optical calibration branch structure includes an optical path detection region, and the optical path detection region is configured to perform optical calibration, thereby improving the correctness and accuracy of obtained detection data through optical detection.

For example, in the case where the detection chip includes a plurality of detection branch structures, the optical calibration branch structure and the plurality of detection branch structures are evenly distributed along the periphery of the sample adding opening. No reaction film is provided in the optical calibration branch structure. For example, other structures of the optical calibration branch structure except for the reaction film may be basically the same as or similar to those of the detection branch structure, so that the optical calibration branch structure can be provided together with the detection branch structure, thereby simplifying the manufacturing process and manufacturing cost of the detection chip.

For example, taking the detection chip 10 illustrated in FIG. 1A to FIG. 2B as an example, the reaction film 150 may not be provided in one detection branch structure 120 and the one detection branch structure 120 can be used as the optical calibration branch structure of the detection chip 10 for optical calibration. For example, one detection branch structure 120 illustrated in FIG. 2B is not provided with, for example, the reaction film 150 (and the water-absorbing film 170 described below), and the one detection branch structure 120 is used as the optical calibration branch structure of the detection chip 10.

For example, the optical calibration branch structure includes a light path detection region, and the light path detection region may be a position corresponding to the detection groove 141. Therefore, when a detection device is used to perform optical detection on the reaction film 150 in the detection chip 10, the optical calibration branch structure can be used to calibrate the light path emitted by the detection device, for example, to calibrate the irradiation angle of the light path, so as to improve the accuracy of the obtained detection data.

It should be noted that in some embodiments of the present disclosure, according to actual needs, two or more optical calibration branch structures may be provided for optical calibration. For example, taking the detection chip 10 illustrated in FIG. 1A to FIG. 2B as an example, two detection branch structures 120 may not be provided with, for example, the reaction film 150 and the two detection branch structures 120 are used as the optical calibration branch structures of the detection chip 10. The two detection branch structures may be symmetrical with respect to the center of the sample adding opening 110, thereby improving the correctness and accuracy of the optical calibration, and further improving the accuracy of the obtained detection data.

It should be noted that in some other embodiments of the present disclosure, the detection chip may also be calibrated in other ways according to actual needs. Correspondingly, the calibration branch structure may also be other types of calibration structures other than optical calibration. For example, in other types of calibration structures, reaction films may be provided according to actual needs, or no reaction films (or other structures or components which may affect calibration, such as the water-absorbing film 170 described below) are provided, and the embodiments of the present disclosure are not limited in this aspect.

For example, the reaction film 150 includes a detection reagent. The sample to be detected added from the sample adding opening 110 enters the detection groove 141 through the guiding channel 130, and reacts with the detection reagent in the reaction film 150. In this case, for example, optical detection can be used to detect the color change or the like reflected on the reaction film 150 after the reaction between the detection reagent and the sample to be detected, so as to realize the detection of the sample to be detected. For example, the presence or absence of a certain component or the content of a certain component in the sample to be detected can be detected.

Therefore, the detection chip 10 provided by at least one embodiment of the present disclosure can realize the integration of multiple functions such as mixing, analysis and detection, or the like, and complete the whole process of sample analysis and detection through active control and capillary action, thereby achieving the automatic and integrated detection process, which reduces the human error that may exist in the detection process and improves the accuracy of the detection data. Moreover, in some embodiments, the detection chip 10 may be provided with reaction films 150 including different detection reagents in the detection grooves 141 of the plurality of detection branch structures 120, respectively, so that different detection reagents can be used to detect multiple indexes of the same sample at the same time, which can shorten the detection period of the sample, and then realize timely detection of the multiple indexes of the sample.

For example, in some examples, the sample to be detected may be a liquid, such as a breast milk sample. During the manufacturing process of the detection chip 10, the required detection reagent (such as a color reagent) may be pre-titrated on the initial reaction film 150, after the detection reagent is immersed in the reaction film 150, the reaction film 150 may be dried, and then the reaction film 150 including the detection reagent is placed in the detection groove of the detection chip 10, thereby facilitating the storage and transportation of the detection chip 10. Where the detection chip 10 is used for detection, the sample is added from the sample adding opening 110, and the sample flows into the detection groove 141 through the guiding channel 130 and is mixed with the detection reagent in the reaction film 150 to react with the detection reagent. Therefore, by detecting the reaction result (for example, by identifying the color change on the reaction film 150), for example, the presence or absence of the analyte in the sample and the content can be determined, so as to realize the detection of a certain index of the sample.

For example, in at least one of the above embodiments, where the detection chip 10 is used to detect a sample, the amount of sample injected may be 60µL∼80µL. As a result, the amount of sample required where the detection chip 10 is used to detect the sample can be reduced, thereby reducing or avoiding sample waste.

For example, in some embodiments, as illustrated in FIG. 1A to FIG. 2B, each detection branch structure 120 may further include a water-absorbing film 170. The water-absorbing film 170 is contained in the detection groove 141 and is at least partially overlapped with the reaction film 150 in the thickness direction (that is, the direction perpendicular to the first substrate 101 described below). For example, the water-absorbing film 170 and the reaction film 150 are in direct contact with each other.

For example, the liquid storage capacity of each water-absorbing film 170 may be 10µL∼50µL, for example, 30µL. The water-absorbing film 170 can hold a certain amount of sample. After exceeding the liquid storage capacity of the water-absorbing film 170, the water-absorbing film 170 will no longer absorb the sample, thereby playing a role of quantifying the sample, which helps to control the amount of the sample.

For example, a material of the water-absorbing film 170 may include a material such as a glass fiber, a cotton fiber, or a composite fiber of the glass fiber and the cotton fiber.

It should be noted that in some other embodiments of the present disclosure, the detection chip may not use a water-absorbing film. In this case, the reaction film 150 can simultaneously play the role of sample quantification and reaction carrier.

It should be noted that in the embodiments of the present disclosure, the length, width, and depth of the plurality of guiding channels 130 are the same as each other, so that the amount of sample flowing into different detection grooves 141 can be controlled to be relatively uniform, which is beneficial to control the amount of the sample in the detection grooves 141, and at the same time, the reaction time for the sample in different detection grooves 141 and the detection reagent in the reaction film 150 can be kept relatively consistent, thereby improving the accuracy of the obtained detection data.

In some other embodiments of the present disclosure, for example, in the case of using different detection reagents to detect multiple indexes of the same sample at the same time, the plurality of guiding channels 130 may be configured to have different sizes, such as different lengths, widths, depths, or the like according to different indexes of the sample to be detected, so that the amount of sample in different detection grooves 141 and the reaction time for the sample in different detection grooves 141 and the detection reagent in the reaction film 150 can be controlled. In this way, multiple more accurate detection data can be obtained at the same time according to actual needs.

It should be noted that, in the embodiments of the present disclosure, such as the specific length, width, and depth of the guiding channel 130 may be determined according to actual requirements such as sample amount and sample characteristics. For example, on the premise that the sample flows into the detection groove 141 from the sample adding opening 110, the length of the guiding channel 130 can be appropriately reduced to reduce or avoid the waste of the sample in the flowing process.

In some other embodiments of the present disclosure, the guiding channel 130 may not be provided in the detection chip 10, for example, the detection groove 141 is directly connected with the sample adding opening 110 to achieve connection, thereby further reducing or avoiding the waste of the sample in the flowing process. In this case, in some examples, the sample adding opening 110 may have a flow guiding structure respectively connected to the plurality of detection grooves 141, so that the sample added into the sample adding opening 110 can evenly flow into the plurality of detection grooves 141.

For example, in some embodiments, sizes of the plurality of detection grooves 141 may also be selected according to different indexes of the sample to be detected, the amount of the sample required, the type of detection reagent, and other reagent conditions. According to actual requirements, sizes and shapes of the plurality of detection grooves 141 may be the same or different, which is not limited in the embodiments of the present disclosure.

For example, in some embodiments, the detection chip 10 further includes a first substrate 101 and a second substrate 102. The first substrate 101 has a first surface and a second surface which are opposite to each other. The sample adding opening 110 is a through hole in the first substrate 101, and the guiding channel 130 and the detection groove 141 are formed on the first surface of the first substrate 101. The second substrate 102 is stacked on the first surface of the first substrate 101 and allows optical detection to be performed at a position corresponding to the detection groove 141.

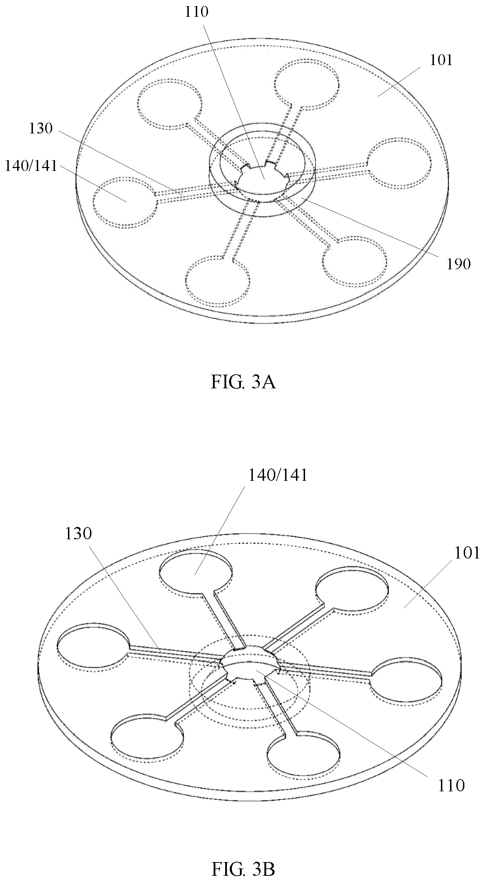

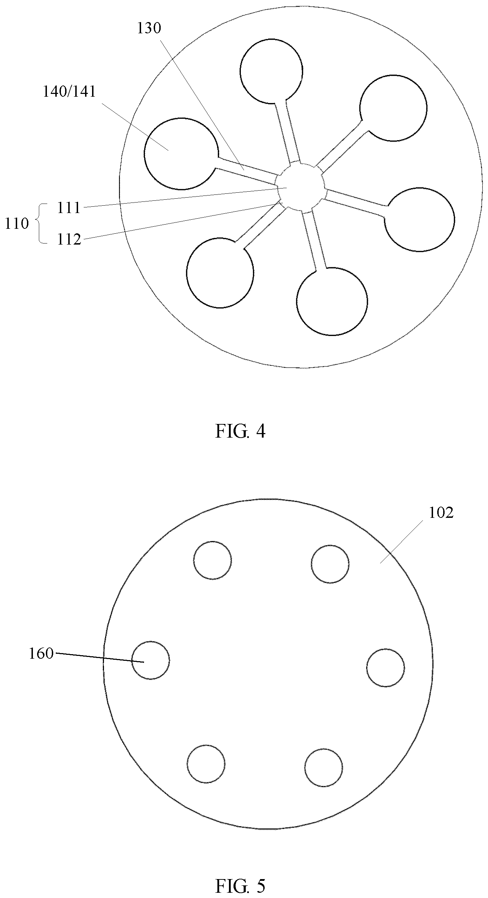

For example, FIG. 3A and FIG. 3B are respectively a front perspective view and a back perspective view of the first substrate of the detection chip illustrated in FIG. 1A and FIG. 1B. FIG. 3A is a top view of the first substrate 101, showing the front structure of the first substrate, and FIG. 3B is a bottom view of the first substrate 101, showing the back structure of the first substrate. FIG. 4 is a schematic planar diagram of the first surface of the first substrate of the detection chip illustrated in FIG. 1A and FIG. 1B, and FIG. 5 is a schematic planar diagram of the second substrate of the detection chip illustrated in FIG. 1A and FIG. 1B.

For example, as illustrated in FIG. 1A to FIG. 5, where the detection chip has a water-absorbing film 170, the water-absorbing film 170 may be disposed on a side of the reaction film 150 away from the second substrate 102, that is, disposed between the reaction film 150 and the detection groove 141.

For example, the second substrate 102 has a detection through hole 160 at a position corresponding to the detection groove 141, so that the reaction film 150 in the detection groove 141 can be optically detected through the detection through hole 160 to obtain the detection index of the sample.

For example, the detection through hole 160 penetrates the second substrate 102, and the diameter of the detection through hole 160 may be set to 2 mm-10 mm, further may be 0.5mm∼4mm, and for example, may be set to 3mm. In this way, optical detection can be achieved through the detection through hole 160, and interference between light rays directed to different detection through holes 160 can be reduced or avoided, thereby further improving the correctness and accuracy of optical detection.

For example, other portions of the second substrate 102 except for the detection through hole 160 may be set as opaque portions, thereby reducing or avoiding interference between the light rays directed to different detection through holes 160, and reducing or avoiding optical crosstalk between different detection through holes 160. For example, the opaque portions of the second substrate 102 can be formed by dyeing or the like.

For example, a light-shielding layer may be provided on the side of the second substrate 102 away from the first substrate 101, and the light-shielding layer covers the surface of the second substrate 102 away from the first substrate 101 except for the position of the detection through hole 160, that is, the light-shielding layer covers the surface of the second substrate 102 away from the first substrate 101 and exposes the detection through hole 160, so as to reduce or avoid interference between the light rays directed to different detection through holes 160, and reduce or avoid optical crosstalk between the detection through holes 160. For example, the light-shielding layer is made of an opaque material, and the light-shielding layer may be disposed on the surface of the second substrate 102 by means of such as pasting, printing, etc. The embodiments of the present disclosure do not limit the specific method of forming the light-shielding layer.

For example, the above-mentioned light-shielding layer may also be disposed on the side of the second substrate 102 close to the first substrate 101, that is, the light-shielding layer covers the surface of the second substrate 102 close to the first substrate 101 and exposes the detection through hole 160, so as to reduce or avoid interference between the light rays directed to different detection through holes 160 as well. Alternatively, in some embodiments of the present disclosure, the side of the second substrate 102 away from the first substrate 101 and the side of the second substrate 102 close to the first substrate 101 may both be provided with a light-shielding layer, two light-shielding layers respectively cover other portions of the surface of the second substrate 102 away from and close to the first substrate 101 except for the position of the detection through hole 160, so as to better reduce or avoid the interference between the light rays directed to different detection through holes 160, thereby reducing or avoiding the optical crosstalk between the detection through holes 160.

For example, in some other embodiments of the present disclosure, the detection through hole may not be provided on the second substrate of the detection chip. In this case, the second substrate may be made of a transparent material that allows light to pass through, so that optical detection can be performed on the reaction film in the detection groove directly through the second substrate.

For example, the second substrate may be made of a transparent material that allows light to pass through, and a detection window is formed by printing or pasting an opaque light-shielding layer on the surface of the second substrate away from the first substrate to allow the light to pass only through the detection window. For example, in some embodiments, the light-shielding layer may also be provided on the surface of the side of the second substrate close to the first substrate, or light-shielding layers may be respectively provided on the surface of the side of the second substrate close to the first substrate and on the surface of the side of the second substrate away from the first substrate at the same time, which is not limited in the embodiments of the present disclosure. The embodiments of the present disclosure do not limit the specific material of the second substrate, as long as the material satisfies that the reaction film in the detection groove of the first substrate can be optically detected through the second substrate or the detection through hole provided on the second substrate.

It should be noted that, in the embodiments of the present disclosure, the number of detection grooves 141 provided on the first substrate 101 and the number of detection through holes 160, corresponding to the detection grooves 141, provided on the second substrate 102 are only illustrative. The embodiments of the present disclosure do not limit the specific number of the detection grooves 141 and the detection through holes 160. For example, 1 to 20 detection grooves 141 may be provided on the first substrate 101, and correspondingly, 1 to 20 detection through holes 160 may be provided on the second substrate 102.

For example, the material of the second substrate 102 may include one or more of polymethyl methacrylate, polystyrene, polycarbonate, and polyethylene terephthalate. For example, the material of the first substrate 101 may include one or more of polymethyl methacrylate, polystyrene, and polycarbonate, or may also be other materials with high light transmittance. The embodiments of the present disclosure do not specifically limit the materials of the first substrate 101 and the second substrate 102.

For example, the first substrate 101 and the second substrate 102 may be combined by bonding (referring to a technology in which two pieces of materials are bonded into one body through van der Waals force, molecular force, atomic force, or the like), welding, adhering, or clamping, so as to simplify the processes such as processing and assembly of the detection chip 10 and reduce the manufacturing cost of the detection chip 10. For example, the first substrate 101 and the second substrate 102 may be combined through processes such as ultrasonic bonding, thermal compression bonding, laser welding, ultrasonic welding, silicone sealing, or the like. The embodiments of the present disclosure do not limit the specific combination manner between the first substrate 101 and the second substrate 102.

For example, the shape of the first substrate 101 may be a circle shape, a rectangle shape, or other suitable shapes, and the shape of the second substrate 102 may also be a circle shape, a rectangle shape, or other suitable shapes.

For example, in the case that the shape of the first substrate 101 is the circle shape, the diameter of the first substrate 101 may be 3cm∼15cm, and further may be 3cm∼5cm. Because the detection chip 10 needs to be matched with, for example, a detection device during use, the first substrate 101 of the above-mentioned size can reasonably reduce the space required for the detection chip 10, so that the detection chip 10 can be designed with a thinner profile, thereby facilitating the cooperative use of the detection chip 10 and the detection device, and reducing the cost of transportation, packaging, and storage of the detection chip 10. For example, in the case that the shape of the second substrate 102 is the circle shape, the diameter of the second substrate 102 may be 3cm∼15cm, and further may be 3cm∼5cm. Because the detection chip 10 needs to be matched with, for example, a detection device during use, the second substrate 102 of the above-mentioned size can reasonably reduce the space required for the detection chip 10, so that the detection chip 10 can be designed with a thinner profile, thereby facilitating the cooperative use of the detection chip 10 and the detection device, and reducing the cost of transportation, packaging, and storage of the detection chip 10.

For example, in the case that the shape of the first substrate 101 is the rectangular shape, the diagonal of the first substrate 101 may be 3cm∼15cm, and further may be 3cm∼5cm. For example, the rectangular first substrate 101 can simplify the manufacturing process of the detection chip 10, and reduce the processing technology and accuracy requirements of the detection chip 10, thereby reducing the manufacturing cost of the detection chip 10. In the case that the shape of the second substrate 102 is the rectangular shape, the diagonal of the second substrate 102 may be 3cm∼15cm, and further may be 3cm∼5cm. For example, the rectangular second substrate 102 can simplify the manufacturing process of the detection chip 10, and reduce the processing technology and accuracy requirements of the detection chip 10, thereby reducing the manufacturing cost of the detection chip 10.

For example, the shape and size of the first substrate 101 and the shape and size of the second substrate 102 may be the same or similar to each other, so as to facilitate the combination of the first substrate 101 and the second substrate 102.

For example, the thickness of the first substrate 101 may be 0.5mm∼10mm, such as 3mm or 5mm. For example, the thickness of the second substrate 102 may be 0.1mm∼5mm, such as 0.5mm or 2mm. Therefore, the space required for the detection chip 10 can be reasonably reduced, and the detection chip 10 can be designed with a thinner profile, thereby reducing the cost of transportation, packaging, and storage of the detection chip 10, and facilitating the cooperative use of the detection chip 10 with the detection device. In addition, the above numerical range is also helpful for the processing and preparation of the detection chip 10, and is convenient for the user to grasp with one hand, fix or pick up with equipment, etc.

For example, in one example, the diameter of the first substrate 101 and the second substrate 102 is 3.5cm, the thickness of the first substrate 101 is 1.5mm, and the thickness of the second substrate 102 is 1mm. As a result, while the detection chip 10 is designed to be thin and convenient for users to grasp with one hand, fix or pick up with equipment, and so on, the manufacturing process of the detection chip 10 can be simplified, and the processing technology and accuracy requirements of the detection chip 10 can be reduced, thereby facilitating the processing and preparation of the detection chip 10.

For example, as illustrated in FIG. 1A to FIG. 5, in some embodiments, the detection chip 10 may further include a sample adding protrusion 190. The sample adding protrusion 190 protrudes from the first surface of the first substrate 101 in a direction away from the second substrate 102. One end of the sample adding protrusion 190 is connected to the sample adding opening 110, and the other end can communicate with the atmosphere. The sample adding protrusion 190 can serve the functions of sample containment and guiding, so that the sample quickly flows to the sample adding opening 110 through the sample adding protrusion 190, thereby facilitating the injection of the sample into the sample adding opening 110, increasing the sample volume of the detection chip 10, and being convenient for such as taking and placing the detection chip 10.

For example, the sample adding protrusion 190 includes a conical cavity and allows the sample adding opening 110 to communicate with the atmosphere. For example, the cone angle of the conical cavity (for example, the angle between the center line and the side wall of the cone) may be 30°∼75°, and the volume may be 50µL∼200µL. For example, the conical cavity of the sample adding protrusion 190 includes a first end and a second end which are opposite to each other. The first end is connected to the sample adding opening 110 and has a diameter of 0.5mm∼5mm, and the second end has a diameter of 1mm∼20mm. The height of the conical cavity of the sample adding protrusion 190 protruding from the first substrate 101 is 1mm∼20mm. Therefore, where the detection chip 10 is used in cooperation with, for example, a detection device, the sample adding protrusion 190 can occupy a reasonable space to match the size of the detection device, thereby facilitating the cooperative use of the detection chip 10 and the detection device. In addition, the sample adding protrusion 190 determined by the above numerical range can better serve the role of sample containment and guiding, for example, the sample can flow to the sample adding opening 110 uniformly and at a reasonable speed, thereby facilitating injecting the sample to the sample adding opening 110.

For example, in an example, the diameter of the end of the sample adding protrusion 190 that is connected to the sample adding opening 110 is 3mm, the diameter of the other end of the sample adding protrusion 190 is 10mm, and the height of the sample adding protrusion 190 protruding from the first substrate 101 is 1.5mm. Therefore, the sample can quickly flow to the sample adding opening 110 through the sample adding protrusion 190, and it is also helpful for, for example, taking and placing the detection chip 10, and cooperative use of the detection chip 10 and the detection device. At the same time, the manufacturing process of the sample adding protrusion 190 can also be simplified, and the processing technology and accuracy requirements are reduced.

For example, in some embodiments, as illustrated in FIG. 4, the sample adding opening 110 includes a first main body 111 and a first protrusion 112 protruding from the first main body 111 to the guiding channel 130, and the first protrusion 112 is in connection with the guiding channel 130 to facilitate the rapid flow of the sample into the guiding channel 130 through the first protrusion 112.

For example, the diameter of the first main body 111 may be set to 1mm∼10mm, such as 5mm or 7mm. Therefore, it is possible to ensure that the sample can flow into the guiding channel 130 evenly and quickly, and the space required by the detection groove 141 can also be ensured.

For example, the shape of the first main body 111 may be a circle shape, a square shape, or other suitable shapes, and the first protrusion 112 may be in a square shape, a sharp angle shape, or other shapes, which is not limited in the embodiments of the present disclosure. For example, in the case that the shape of the first main body 111 is the square shape, the length of the diagonal of the first main body 111 may be set to 1mm∼10 mm, such as 5mm or 7mm. For example, the circular or square first main body 111 can simplify the manufacturing process of the detection chip 10, and reduce the processing technology and accuracy requirements of the detection chip 10, thereby reducing the manufacturing cost of the detection chip 10.

For example, the inner wall of the guiding channel 130 may be hydrophilic, for example, the contact angle of the liquid on the inner wall of the guiding channel 130 is less than 90°, which helps the sample to quickly enter the guiding channel 130 and allows the sample to quickly flow into the detection groove 141 through the guiding channel 130 to mix with the reaction film 150, thereby shortening the detection time of the sample and improving the accuracy of the obtained detection data. For example, in the process of manufacturing the detection chip, a hydrophilic treatment agent may be injected into the guiding channel 130, the guiding channel 130 is soaked in the hydrophilic treatment agent for 1 minute, and then the hydrophilic treatment agent is discharged with air to make the inner wall of the guiding channel 130 to be hydrophilic.

It should be noted that the contact angle of the liquid on the inner wall of the guiding channel 130 refers to the angle formed by the tangent along the surface of the liquid drop and the inner wall surface of the guiding channel 130. For example, when the contact angle of the liquid on the inner wall of the guiding channel 130 is less than 90°, it can be considered that the inner wall of the guiding channel 130 is hydrophilic. The smaller the value of the contact angle of the liquid on the inner wall of the guiding channel 130, the better the wettability of the inner wall of the guiding channel 130. For example, when the contact angle of the liquid on the inner wall of the guiding channel 130 is 0°, the material of the inner wall of the guiding channel 130 is completely wetted. The embodiments of the present disclosure do not limit the specific value of the contact angle of the liquid on the inner wall of the guiding channel 130, as long as the contact angle is less than 90° to make the inner wall of the guiding channel 130 hydrophilic.

For example, in some embodiments, the height of the guiding channel 130 may be set to 0.1mm∼1.5mm, such as 0.5mm, and the width of the guiding channel 130 may be set to 0.1mm∼2mm, such as 0.5mm. Therefore, it is helpful to control the amount of sample flowing into the detection groove 141 through the guiding channel 130, and reduce or avoid the waste of the sample in the flowing process.

For example, in some embodiments, the ratio of the height of the guiding channel 130 to the width of the guiding channel 130 may be set to 1:1-10:1, such as 2:1. Therefore, in some embodiments, where the first substrate 101 and the second substrate 102 are combined by an adhering method, for example, the first surface of the first substrate 101 and the second substrate 102 are adhered by an adhesive, in this case, the adhesive may be made of a hydrophobic material. Because there is a hydrophobic adhesive between the first surface of the first substrate 101 and the adhering surface of the second substrate 102, by increasing the ratio of the height of the guiding channel 130 to the width of the guiding channel 130, the contact area of the sample with the hydrophobic adhesive on the adhering surface of the second substrate 102 when the sample flows through the guiding channel 130 can be reduced, thereby realizing the rapid flow of the sample in the guiding channel 130.

For example, in one example, the height of the guiding channel 130 is 1mm, and the width of the guiding channel 130 is 0.5mm. Therefore, it is helpful to realize the rapid flow of the sample in the guiding channel 130, and can reduce or avoid the waste of the sample in the flowing process as well. At the same time, the manufacturing process of the guiding channel 130 can be simplified, and the processing technology and accuracy requirements can be reduced.

It should be noted that, in some embodiments, the second end of the guiding channel 130 (that is, the end connected with the detection groove 141) is in contact with the reaction film 150, thereby facilitating the immersion of the sample into the reaction film 150, so that the sample can fully react with the detection reagent in the reaction film 150. For example, a part of the reaction film 150 may be located in the guiding channel 130. However, in some embodiments, the reaction film 150 may not be in contact with the second end of the guiding channel 130, and the embodiments of the present disclosure are not limited in this aspect.

For example, in the embodiments of the present disclosure, structures such as the sample adding protrusion 190, the sample adding opening 110, the guiding channel 130, the detection groove 141, or the like of the detection chip 10 can be integrally formed by, for example, an injection molding process, thereby simplifying the manufacturing process of the detection chip 10.

For example, in some embodiments, the reaction film 150 includes a matrix material and a detection reagent distributed in the matrix material. The matrix material may include a glass fiber, a cotton fiber, a composite fiber of the glass fiber and the cotton fiber, or the like.

For example, in the detection chip of some embodiments, in a state where the first substrate 101 and the second substrate 102 are combined, the reaction film 150 is compressed by two substrates in the thickness direction to be in a compressed state. For example, the thickness of the reaction film 150 in a relaxed state may be equal to or slightly higher than the height of the detection groove 141, for example, the ratio of the thickness of the reaction film 150 in the relaxed state to the height of the detection groove 141 may be 1:1-1:0.5, and after the first substrate 101 and the second substrate 102 are combined, because the reaction film 150 is compressed in the thickness direction, the surface of the reaction film 150 facing the second substrate 102 and the first surface of the first substrate 101 may be on the same level, so that the reaction film 150 is in close contact with the second substrate 102, which can avoid a gap to be formed between the reaction film 150 and the first substrate 101 or the second substrate 102 to cause liquid retention. Therefore, the injecting sample can be more fully immersed in the reaction film 150 and react more fully with the detection reagent in the reaction film 150, which improves the accuracy of the obtained detection data.

For example, in some embodiments of the present disclosure, the compression amount of the reaction film 150 may be set to 10%∼40%, so as to help allow the reaction film 150 to be in close contact with the second substrate 102, thereby reducing or avoiding a gap to be formed between the reaction film 150 and the first substrate 101 or the second substrate 102 to cause liquid retention.

For example, the shape of the reaction film 150 is generally the same as or similar to the shape of the detection groove 141, which helps the reaction film 150 to be contained in the detection groove 141, and helps the reaction film 150 to be uniformly mixed with the sample.

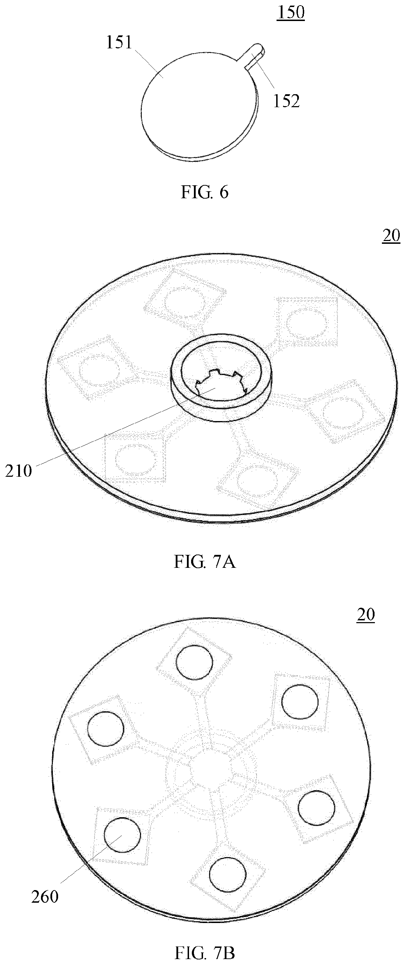

For example, FIG. 6 shows an exemplary structure of the reaction film of the detection chip illustrated in FIG. 1A and FIG. 1B.

For example, as illustrated in FIG. 4 and FIG. 6, in some embodiments, the reaction film 150 includes a film main body 151 and a second protrusion 152. The shape of the film main body 151 is the same as the shape of the detection groove 141, and is a circle shape. The second protrusion 152 protrudes from the film main body 151 to the guiding channel 130, and at least a part of the second protrusion 152 is located in the guiding channel 130, thereby helping to introduce the sample from the guiding channel 130 to the detection groove 141. Moreover, the sample can be fully immersed in the reaction film 150, so that the sample and the detection reagent in the reaction film 150 can fully react, and the accuracy of the obtained detection data is improved.

For example, the diameter of the detection groove 141 may be set to 3mm∼15mm, and the diameter of the film main body 151 of the reaction film 150 is equal to or smaller than the diameter of the detection groove 141. Therefore, the reaction film 150 can be better contained in the detection groove 141, which helps to mix the reaction film 150 and the sample uniformly.

For example, in some other embodiments of the present disclosure, the entire reaction film may also be set to have the same shape as the detection groove, that is, the reaction film may only have the film main body portion but not have the protrusion portion (for example, the second protrusion 152). The embodiments of the present disclosure are not limited in this aspect.

For example, in some other embodiments of the present disclosure, the reaction film may also be configured in a polygon shape, and one corner of the polygon shape is directly connected with the second end of the guiding channel. Correspondingly, the detection groove is in a polygon shape that is the same as or similar to the shape of the reaction film.

For example, the reaction film may be in a regular shape, such as a triangle shape, a square shape, a rhombus shape, etc., or may be in an irregular shape, etc., which is not limited in the embodiments of the present disclosure.

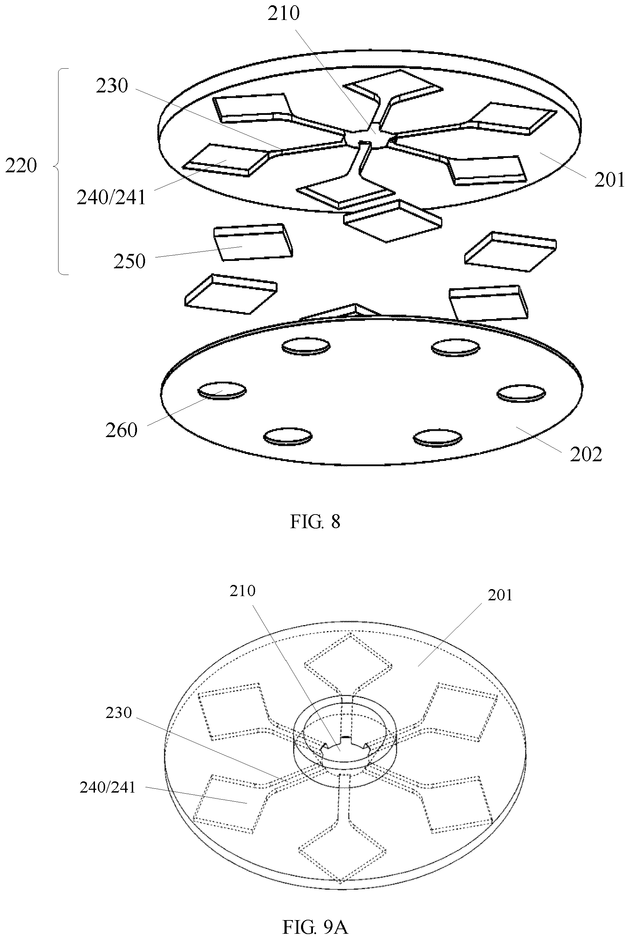

For example, FIG. 7A and FIG. 7B are respectively a front perspective view and a back perspective view of another detection chip provided by at least one embodiment of the present disclosure. For example, FIG. 7A is a top view of the detection chip, and FIG. 7B is a bottom view of the detection chip. FIG. 8 is an exploded view, that is, a breakdown view, of the detection chip illustrated in FIG. 7A and FIG. 7B.

For example, as illustrated in FIG. 7A to FIG. 8, the detection chip 20 includes a sample adding opening 210 and a plurality of detection branch structures 220, and the plurality of detection branch structures 220 are evenly distributed along the periphery of the sample adding opening 210. Each of the plurality of detection branch structures 220 includes a guiding channel 230 and a detection portion 240. The guiding channel 230 has a first end and a second end, and the first end is in connection with the sample adding opening 210. The detection portion 240 includes a detection groove 241 and a reaction reagent (for example, a reaction film 250), the detection groove 241 is in connection with the second end of the guiding channel 230, the reaction film 250 is contained in the detection groove 241, and the detection portion 240 is configured to allow optical detection to be performed on the reaction film 250 located in the detection groove 241.

For example, as illustrated in FIG. 7A to FIG. 8, the reaction film 250 of the detection chip 20 is in a polygonal shape, such as a square shape or a rhombus shape. Accordingly, the shape of the detection groove 241 is also in a square shape or a rhombus shape.

For example, the length of the side of the detection groove 241 may be set to 3mm∼15mm, such as 5mm or 10mm, and the length of the side of the reaction film 250 is equal to or less than the length of the side of the detection groove 241. Therefore, the reaction film 250 can be better contained in the detection groove 241, thereby helping to mix the reaction film 250 and the sample uniformly.

For example, in the case that the shape of the detection groove 341 is in a square shape, the diagonal of the square shape may be set to 1mm∼20mm, such as 10mm or 15mm. For example, in the case that the shape of the detection groove 341 is in a rhombus shape, two diagonals of the rhombus shape may be respectively set to 1mm∼20mm, for example, the length of one diagonal is 10mm, and the length of the other diagonal is 6mm. For example, the length ratio of the two diagonals of the rhombus shape may be set to 1:1∼1:2. For example, the angle between two adjacent sides of the rhombus shape may be set to be less than or equal to 60°, so as to help the sample to be fully immersed into the reaction film 250 along the periphery of the reaction film 250, so that the sample can fully react with the detection reagent in the reaction film 250, thereby improving the accuracy of the obtained detection data.

For example, one corner of the reaction film 250 is directly connected with the second end of the guiding channel 230 to introduce the sample from the guiding channel 230 into the detection groove 241, and the sample can be fully immersed in the reaction film 250, so that the sample can fully react with the detection reagent in the reaction film 250 to improve the accuracy of the obtained detection data.

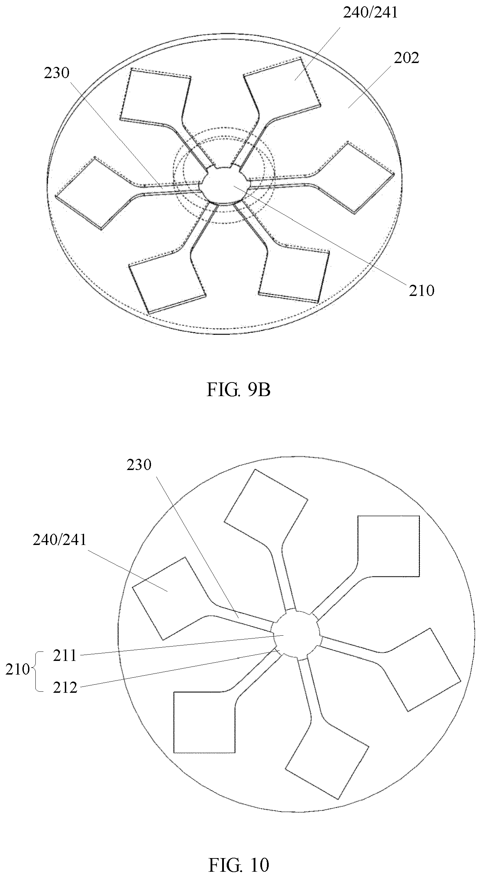

FIG. 9A and FIG. 9B are respectively a front perspective view and a back perspective view of the first substrate of the detection chip illustrated in FIG. 7A and FIG. 7B. For example, FIG. 9A is a top view of the first substrate 201, and FIG. 9B is a bottom view of the first substrate 201. FIG. 10 is a schematic planar diagram of the first surface of the first substrate of the detection chip illustrated in FIG. 7A and FIG. 7B.

For example, as illustrated in FIG. 7A to FIG. 10, the detection chip 20 further includes a first substrate 201 and a second substrate 202. The first substrate 201 has a first surface and a second surface which are opposite to each other. The sample adding opening 210 is a through hole in the first substrate 201, and the guiding channel 230 and the detection groove 241 are formed on the first surface of the first substrate 201. The second substrate 202 is stacked on the first surface of the first substrate 201 and allows optical detection to be performed at a position corresponding to the detection groove 241.

For example, the second substrate 202 has a detection through hole 260 at a position corresponding to the detection groove 241, and the reaction film 250 in the detection groove 241 can be optically detected through the detection through hole 260 to obtain different detection indexes of the sample.

For example, in the embodiments of the present disclosure, the shape of the detection through hole 260 is a circle shape, while in some other embodiments of the present disclosure, the shape of the detection through hole 260 may also be set to be the same as the shape of the detection groove 241, such as a square shape, a rhombus shape, or other shapes, and the embodiments of the present disclosure are not limited in this aspect.

For example, as illustrated in FIG. 10, the sample adding opening 210 includes a first main body 211 and a first protrusion 212 protruding from the first main body 211 to the guiding channel 230, and the first protrusion 212 is in connection with the guiding channel 230, so that the sample flows into the guiding channel 230 through the first protrusion 212.

It should be noted that the materials, specific structural parameters, etc. of the first substrate 201 and the second substrate 202 can refer to the corresponding descriptions of the first substrate 101 and the second substrate 102 of the detection chip 10 in the above-mentioned embodiments, which will not be repeated here. For specific structural parameters, materials, and functions of the detection chip 20, reference may be made to the corresponding descriptions of the detection chip 10 in the above-mentioned embodiments, which will not be repeated here.

For example, in some embodiments of the present disclosure, the detection portion of the detection chip may further include a guiding groove located at the periphery of the detection groove, for example, the guiding groove may at least partially surround the detection groove. The guiding groove is formed on the first surface of the first substrate and is in connection with the detection groove, and the height of at least part of the guiding groove is smaller than the height of the detection groove. Therefore, the sample can quickly infiltrate part of the peripheral region of the reaction film through the guiding groove, and a capillary force is generated between the guiding groove and the reaction film to play a role of guiding, so that the sample may infiltrate from the periphery of the reaction film to the center region of the reaction film, thereby accelerating the mixing speed between the sample and the reaction film and further shortening the detection time. In addition, where the sample infiltrates from the periphery of the reaction film, due to the capillary action, the amount of sample infiltrated into the center region of the reaction film will increase, which in turn makes the detection result (such as color development) in the center region of the reaction film more obvious to be convenient to observe the detection results later, thereby improving the accuracy of the obtained detection data.

For example, in some embodiments of the present disclosure, the guiding groove surrounds the circumference of the detection groove, that is, surrounds all the peripheral regions of the detection groove, so that the sample can infiltrate the periphery of the reaction film more quickly through the guiding groove, and then infiltrate from the periphery of the reaction film to the center of the reaction film, thereby further accelerating the mixing speed between the sample and the reaction film, and significantly shortening the required detection time. In addition, where the sample infiltrates from the circumference of the reaction film at the same time, the amount of sample infiltrating into the center of the reaction film increases due to the capillary action, which makes the detection result (such as color development) of the center of the reaction film the most obvious, so as to be convenient to observe the detection results later, thereby further improving the accuracy of the obtained detection data.

It should be noted that in some embodiments of the present disclosure, the guiding groove may also cross or partially overlap with the detection groove in a direction perpendicular to the first surface of the first substrate. The embodiments of the present disclosure are not limited in this aspect.

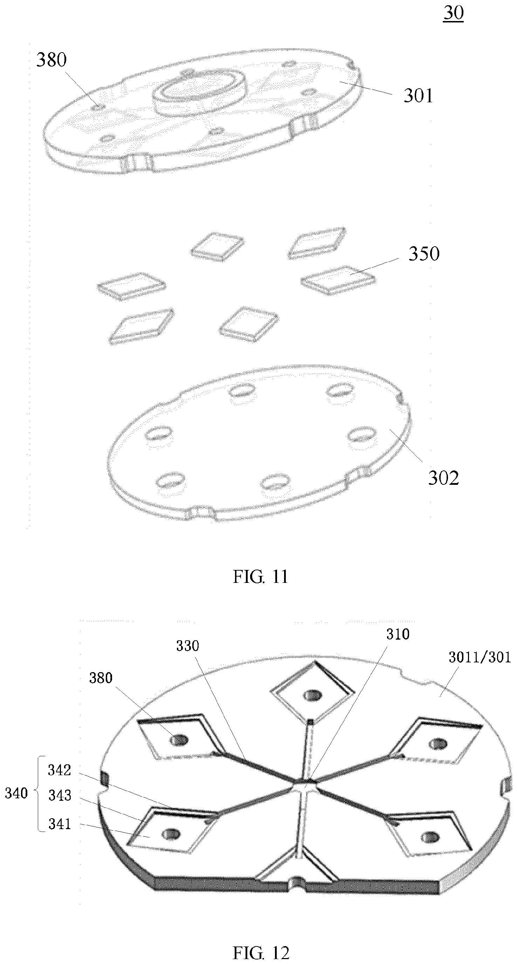

For example, FIG. 11 is an exploded view, that is, a breakdown view, of still another detection chip provided by at least one embodiment of the present disclosure. FIG. 12 is a schematic structural diagram of the first substrate of the detection chip illustrated in FIG. 11. For example, FIG. 12 is a bottom view of the first substrate 301 of the detection chip 30 illustrated in FIG. 11. It should be noted that, except for the liquid storage through hole 380 and the guiding groove 342, the structure and function of the detection chip 30 illustrated in FIG. 11 are basically the same as or similar to those of the detection chip 20 illustrated in FIG. 7A to FIG. 8, which are not repeated here.

For example, as illustrated in FIG. 11 and FIG. 12, the detection portion 340 of the detection chip 30 includes a reaction reagent (for example, a reaction film 350), a detection groove 341, and guiding grooves 342 and 343 surrounding the detection groove 341.

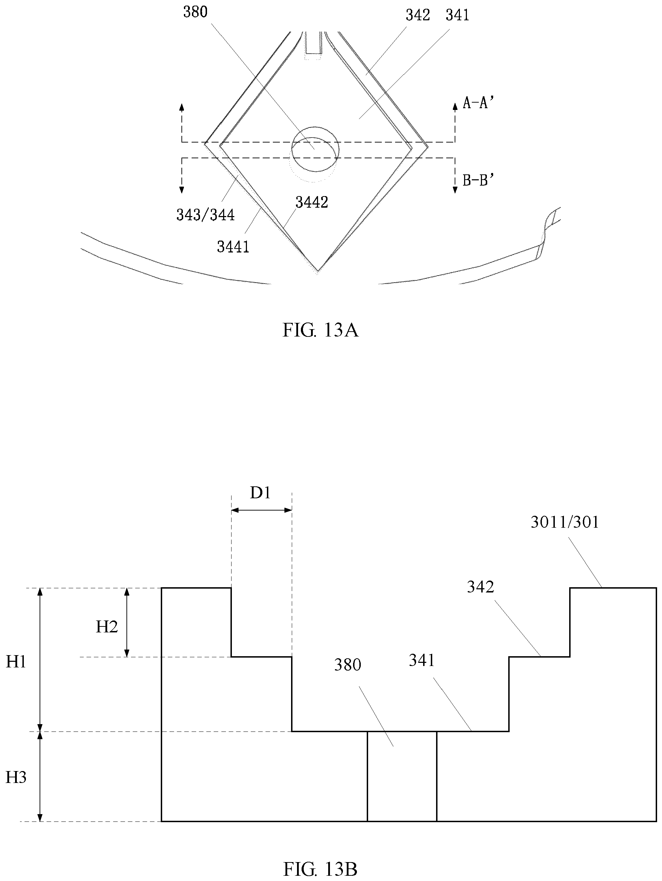

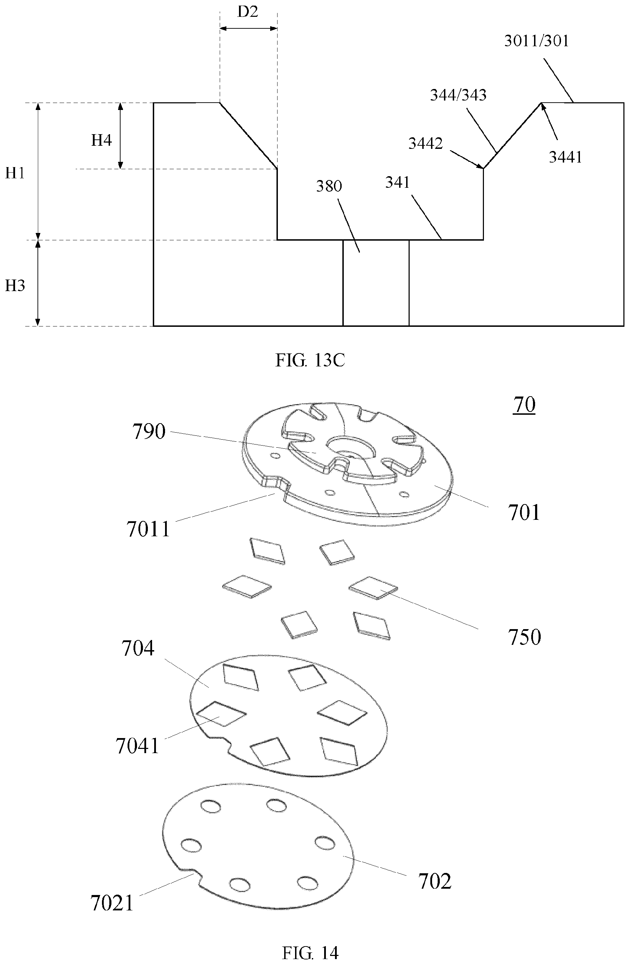

FIG. 13A is a schematic diagram of a partial structure of the first substrate of the detection chip illustrated in FIG. 12, for example, a schematic structural diagram of a partial structure of the first substrate 301 of the detection chip 30 including the detection portion 340, FIG. 13B is a schematic cross-sectional structural diagram along a line A-A' in FIG. 13A, and FIG. 13C is a schematic cross-sectional structural diagram along a line B-B' in FIG. 13A. It should be noted that, for brevity and clarity, the reaction film 350 of the detection portion 340 is not illustrated in FIG. 12 to FIG. 13C.

For example, as illustrated in FIG. 11 to FIG. 13C, the guiding grooves 342 and 343 are formed on the first surface 3011 of the first substrate 301 and are in connection with the detection groove 341. For example, one end of the guiding groove 342 is connected to the guiding channel 330, and the other end of the guiding groove 342 is connected with the guiding groove 343. Therefore, when the sample flows into the detection portion 340 through the guiding channel 330, the sample will first flow into the guiding grooves 342 and 343, then rapidly infiltrate the circumference of the reaction film 350 through the guiding grooves 342 and 343, and then infiltrate from the periphery of the reaction film 350 to the center of the reaction film 350, thereby increasing the mixing speed of the sample and the reaction film 350, and shortening the required detection time. Moreover, due to the capillary action, the amount of sample infiltrating into the center of the reaction film 350 is increased, thereby making the detection result (such as color development) of the center of the reaction film 350 more obvious, and facilitating the observation of subsequent detection results, thereby improving the accuracy of the obtained detection data.

For example, as illustrated in FIG. 13A and FIG. 13B, longitudinal sections of the guiding groove 342 and the detection groove 341 are in a stepped shape as a whole, so that a larger gap for sample flowing can be formed between the guiding groove 342 and the reaction film 350, thereby further increasing the flowing speed of the sample in the guiding groove 342, so that the sample can quickly infiltrate the periphery of the reaction film 350, and then infiltrate from the periphery of the reaction film 350 to the center of the reaction film 350, thereby improving the infiltration effect of the center of the reaction film 350, and making the detection result (for example, color development) of the center of the reaction film 350 more obvious.

For example, as illustrated in FIG. 13A and FIG. 13B, the height H2 of the guiding groove 342 is smaller than the height H1 of the detection groove 341. For example, the height H1 of the detection groove 341 may be set to 0.2mm∼5mm, such as 2mm or 3mm, etc., so that in the state where the first substrate 301 and the second substrate 302 are combined, the reaction film 350 is compressed by two substrates in the thickness direction to be in the compressed state, the surface of the reaction film 350 facing the second substrate 302 and the first surface 3011 of the first substrate 301 can be on the same level, and the reaction film 350 and the second substrate 302 are in close contact, which can avoid a gap formed between the reaction film 350 and the first substrate 301 or the second substrate 302 to cause liquid retention. The difference between the height H2 of the guiding groove 342 and the height H1 of the detection groove 341 is 0.1mm∼1mm, such as 0.5mm or 0.8mm, etc., so that the sample can flow quickly in the detection groove 341, and the sample can infiltrate the periphery of the reaction film 350 more quickly.

For example, the width D1 of the guiding groove 342 may be set to 0.1mm∼1mm, such as 0.5mm or 0.7mm. Therefore, a sufficient and appropriate gap for the sample to flow is formed between the guiding groove 342 and the reaction film 350, which in turn helps the sample to infiltrate from the periphery of the reaction film 350 to the center of the reaction film 350, improves the infiltration effect of the center of the reaction film 350, and makes the detection result (for example, color development) of the center of the reaction film 350 more obvious.

For example, in the case that the shape of the detection groove 341 is in a square shape, the diagonal of the square shape may be set to 1mm∼20mm, such as 10mm or 15mm. For example, in the case that the shape of the detection groove 341 is in a rhombus shape, two diagonals of the rhombus shape may be respectively set to 1mm∼20mm, for example, the length of one diagonal is 10mm, and the length of the other diagonal is 6mm. For example, the length ratio of the two diagonals of the rhombus shape may be set to 1:1∼1:2. For example, the angle between two adjacent sides of the rhombus shape may be set to be less than or equal to 60°, which helps the sample to infiltrate the center of the reaction film 350 along the circumference of the reaction film 350, so that the sample can be fully immersed in the reaction film 350, and the accuracy of the obtained detection data is further improved.

For example, in some other embodiments of the present disclosure, the guiding groove 342 may also be designed in a stepped shape including a multilayer step structure, which is not limited in the embodiments of the present disclosure.

For example, as illustrated in FIG. 13A and FIG. 13C, the guiding groove 343 is provided in a slope-like structure. For example, the guiding groove 343 includes a guiding wall 344 in a sloped shape, the guiding wall 344 is inclined with respect to the first surface 3011 of the first substrate 301, the first end 3441 of the guiding wall 344 is connected with the first surface 3011 of the first substrate 301, and the second end 3442 of the guiding wall 344 is connected with the side surface of the detection groove 341. Because compared with the guiding groove 342, the gap formed between the guiding groove 343 and the reaction film 350 for sample flowing is smaller, the flowing velocity of the sample in the guiding groove 343 is slightly lower than the flowing velocity of the sample in the guiding groove 342. Therefore, after the sample flows into the guiding groove 343 through the guiding groove 342, excessive storage of the sample in the guiding groove 343 can be reduced or avoided, thereby further improving the speed of the sample infiltrating from the periphery of the reaction film 350 to the center of the reaction film 350, increasing the amount of sample infiltrating into the center of the reaction film 350, and therefore making the detection result (such as color development) of the center of the reaction film 350 more obvious, which is more conducive to the observation of subsequent detection results.

It should be noted that in some other embodiments of the present disclosure, the guiding groove 343 may also be set in other suitable structures, as long as the space for the sample flowing formed between the guiding groove 343 and the reaction film 350 is less than or equal to the space for the sample flowing formed between the guiding groove 342 and the reaction film 350, and the embodiments of the present disclosure are not limited in this aspect.

For example, as illustrated in FIG. 12, FIG. 13A, and FIG. 13C, the second end 3442 of the guiding wall 344 is not parallel to the first surface 3011 of the first substrate 301, for example, the second end 3442 of the guiding wall 344 is inclined with respect to the first surface 3011 of the first substrate 301 and extends towards the first surface 3011 of the first substrate 301 along the flowing direction of the sample (for example, in the direction away from the sample adding opening 310). That is, the surface area of the guiding wall 344 (that is, the contact area between the guiding wall 344 and the sample) gradually decreases along the flowing direction of the sample, for example, gradually decreases in the direction away from the sample adding opening 310, so that the space for the sample to flow formed between the guiding groove 343 and the reaction film 350 gradually decreases along the flowing direction of the sample. Thus, the speed of sample infiltration from the periphery of the reaction film 350 to the center of the reaction film 350 is further increased, and the amount of sample infiltrating into the center of the reaction film 350 is further increased to a certain extent, thereby enabling the detection result (such as color development) of the center of the reaction film 350 to be more obvious, which is more conducive to the observation of subsequent detection results, thereby improving the accuracy of the obtained detection data.

It should be noted that in some other embodiments of the present disclosure, the guiding wall 344 may also be set in other suitable contour shapes, as long as the contact area between the guiding wall 344 and the sample is gradually reduced along the flowing direction of the sample, and the embodiments of the present disclosure are not limited in this aspect.

For example, the maximum height H4 of the guiding groove 343 is smaller than the height H1 of the detection groove 341, that is, a distance between the second end of the guiding wall 344 connected with the side surface of the detection groove 341 and the first surface 3011 of the first substrate 301 is smaller than the height H1 of the detection groove 341. As a result, a gap for the sample to flow can be formed between the guiding groove 343 and the reaction film 350, so that the sample can quickly infiltrate along the periphery of the reaction film 350, and then infiltrate from the periphery of the reaction film 350 to the center of the reaction film 350. Therefore, the infiltration effect of the center of the reaction film 350 is improved, and the detection result (for example, color development) of the center of the reaction film 350 is more obvious.

For example, the difference between a distance between the second end of the guiding wall 344 and the first surface 3011 of the first substrate 301 and the height of the detection groove 341 (that is, the difference between H4 and H1) may be set to 0.1mm∼1mm. As a result, an appropriate gap for the sample to flow can be formed between the guiding groove 343 and the reaction film 350, thereby improving the infiltration effect of the center of the reaction film 350.

For example, the width D2 of the guiding groove 343 may be set to 0.1mm∼1mm, such as 0.5mm or 0.7mm, etc., so that an appropriate gap for sample to flow is formed between the guiding groove 343 and the reaction film 350, and therefore the infiltration effect of the center of the reaction film 350 is improved.

It should be noted that, in the above-mentioned embodiments illustrated in FIG. 11 to FIG. 13C, the width D1 of the guiding groove 342 is the same as the width D2 of the guiding groove 343, and the height H2 of the guiding groove 342 is the same as the maximum height H4 of the guiding groove 343; and in some other embodiments of the present disclosure, the width D1 of the guiding groove 342 and the width D2 of the guiding groove 343 may also be different from each other, and the height H2 of the guiding groove 342 and the maximum height H4 of the guiding groove 343 may also be different from each other. The embodiments of the present disclosure are not limited in this aspect.

It should be noted that, in the above-mentioned embodiments illustrated in FIG. 11 to FIG. 13C, the guiding groove surrounding the detection groove 341 includes the guiding groove 342 and the guiding groove 343 with different structures, and in some other embodiments of the present disclosure, the guiding grooves surrounding the detection groove 341 may also adopt the same structure, for example, all the guiding grooves are set as the guiding grooves 342, or all the guiding grooves are set as the guiding grooves 343. The embodiments of the present disclosure are not limited in this aspect.

It should be noted that, in the above-mentioned embodiments illustrated in FIG. 11 to FIG. 13C, the guiding groove being provided on the periphery of the detection groove in a rhombus shape is taken as an example to illustrate the structure of the guiding groove. In some other embodiments of the present disclosure, in the case that the detection groove is in a triangle shape, a circle shape, or other regular or irregular shapes, it is also possible to provide a guiding groove around the corresponding detection groove, for example, a guiding groove is provided on the periphery of the detection groove 141 of the detection chip 10 illustrated in FIG. 1A to FIG. 2B, which is not limited in the embodiments of the present disclosure.

For example, in the embodiments of the present disclosure, the guiding grooves 342 and 343 surround the detection groove 341 and the contour shapes of the guiding grooves 342 and 343 are the same as the contour shape of the detection groove 341; and in some other embodiments of the present disclosure, the contour shapes of the guiding grooves 342 and 343 may also be different from the contour shape of the detection groove 341, which is not limited in the embodiments of the present disclosure.

For example, in some other embodiments of the present disclosure, the guiding groove may partially surround the detection groove. For example, taking a detection groove in a rhombus shape as an example, the guiding groove may be provided only corresponding to two adjacent sides of the detection groove and the guiding channel, to achieve rapid mixing between the sample and the reaction film. At the same time, it can also make the detection result (such as color development) in a certain area or a certain range near the center of the reaction film more obvious, thereby facilitating subsequent observation of the detection results and improving the accuracy of the obtained detection data.

For example, as illustrated in FIG. 12 and FIG. 13A, the guiding channel 330 extends into the detection groove 341, and the second end of the guiding channel 330 connected with the detection groove 341 is located in the detection groove 341 with the rhombus shape, so that the sample can infiltrate the reaction film 350 more quickly and fully, and the required detection time is shortened.

For example, the length of the second end of the guiding channel 330 extending into the detection groove 341 is less than or equal to 1.5mm, such as 0.5mm or 1mm. Therefore, it can help to introduce the sample from the guiding channel 330 to the detection groove 341, so that the sample can be fully immersed in the reaction film 350, the sample can fully react with the detection reagent in the reaction film 350, and the accuracy of the obtained detection data is improved.

For example, in some embodiments of the present disclosure, the reaction film 350 is in a compressed state along the thickness direction (that is, along the direction of the height H1 illustrated in FIG. 13A or 13B). For example, the thickness of the reaction film 350 in the relaxed state may be equal to or slightly higher than the height H1 of the detection groove 341, for example, the ratio of the thickness of the reaction film 350 in the relaxed state to the height H1 of the detection groove 341 may be 1:1-1:0.5, and after the first substrate 301 and the second substrate 302 are combined, because the reaction film 350 is compressed in the thickness direction, the reaction film 350 is in close contact with the second substrate 302, thereby avoiding a gap formed between the reaction film 350 and the first substrate 301 or the second substrate 302 to cause liquid storage.

For example, as illustrated in FIG. 11 and FIG. 12, the detection portion 340 may further include a liquid storage through hole 380 that penetrates the first substrate 301 and is in connection with the detection groove 341. In the case that the amount of sample injected through the sample adding opening 310 is too much, the excess sample can be stored in the liquid storage through hole 380, thereby avoiding or reducing liquid leakage caused by excessive sample injection, and the liquid storage through hole 380 can also promote the sample to pass through the guiding grooves 342 and 343 to infiltrate from the periphery of the reaction film 350 to the center of the reaction film 350, so that the detection result (for example, color development) of the center of the reaction film 350 is more obvious.

For example, the diameter of the liquid storage through hole 380 may be set to 0.2mm∼5mm, such as 2mm or 3mm, etc., so as to help control the amount of sample, avoid or reduce liquid leakage caused by excessive sample injection, promote the sample to infiltrate from the periphery of the reaction film 350 to the center of the reaction film 350, and reduce the processing technology and accuracy requirements of the liquid storage through hole 380, thereby simplifying the manufacturing process.

For example, as illustrated in FIG. 13B and FIG. 13C, the ratio of the depth H3 of the liquid storage through hole 380 to the height H1 of the detection groove 341 may be set to 0.5:1∼10:1, such as 3:1, etc., so as to serve as a role of sample quantification, which is conducive to controlling the amount of sample, and the liquid storage through hole 380 can also store more amount of sample to prevent sample overflow.

For example, the liquid storage through hole 380 communicates with the center of the detection groove 341, that is, the liquid storage through hole 380 is opened at the center position of the bottom surface of the detection groove 341, and the center of the detection groove 341 communicates with the external environment such as the atmosphere, which may better promote the infiltration of the sample from the periphery to the center of the reaction film 350.

For example, in the manufacturing process of the detection chip 30, in order to facilitate the assembly of the detection chip 30, negative pressure may be applied to the liquid storage through hole 380 during assembly to fix the reaction film 350 in the detection groove 341. In this way, the sample can more fully react with the detection reagent in the reaction film 350, and the accuracy of the obtained detection data is further improved.

For example, in an example of the present disclosure, the shape of the detection groove 341 is a rhombus shape, the two diagonals of the rhombus shape are 8mm and 5.8mm, respectively, the height H1 of the detection groove 341 is 0.5 mm, the difference between the height H2 of the guiding groove 342 and the height H1 of the detection groove 341 is 0.3mm, the difference between the maximum height H4 of the guiding groove 343 and the height H1 of the detection groove 341 is 0.3mm, the width D1 of the guiding groove 342 is 0.3mm, the width D2 of the guiding groove 343 is 0.3mm, the diameter of the liquid storage through hole 380 is 2.5mm, and the depth H3 of the liquid storage through hole 380 is 1mm. Therefore, it is beneficial to control the amount of sample in the detection groove 341, avoid or reduce liquid leakage caused by excessive sample injection, and at the same time promote the infiltration of the sample from the periphery to the center of the reaction film 350, so that the amount of the sample that infiltrates the center of the reaction film 350 is increased, and the detection result (for example, color development) at the center of the reaction film 350 is more obvious, which is more conducive to the observation of subsequent detection results.

It should be noted that in some other embodiments of the present disclosure, the liquid storage through hole may also be opened at other positions on the bottom surface of the detection groove; or, according to actual needs, a plurality of liquid storage through holes may also be opened in each detection portion. The embodiments of the present disclosure do not limit the location and the number of the liquid storage through holes.

FIG. 14 is an exploded view, that is, a breakdown view, of still another detection chip provided by at least one embodiment of the present disclosure. FIG. 14 is a top view of the detection chip, showing the structure viewed from the front of the detection chip. It should be noted that, except for the adhesive layer 704 and the sample adding protrusion 790, the structure and function of the detection chip 70 illustrated in FIG. 14 are basically the same or similar to the structure and function of the detection chip 30 illustrated in FIG. 11, and details will not be repeated here.

For example, FIG. 14 shows a situation where the detection chip 70 combines the first substrate 701 and the second substrate 702 through an adhesive layer 704.

For example, as illustrated in FIG. 14, the adhesive layer 704 is stacked between the first substrate 701 and the second substrate 702, that is, stacked on the first surface of the first substrate 701.

For example, the adhesive layer 704 may be made of a hydrophobic material, such as a double-sided tape.

For example, as illustrated in FIG. 14, the adhesive layer 704 includes openings 7041 corresponding to the detection grooves and guiding grooves (not shown) of the first substrate 701, which can avoid the obstacles to the flow of the sample due to the uneven surface and its own viscosity of the adhesive layer 704. At the same time, it can also avoid the adhesion between the adhesive layer 704 and the reaction film 750, thereby helping the sample to flow in the detection groove and the guiding groove, and enabling the sample to quickly and fully infiltrate the reaction film 750, which improves the accuracy of the obtained detection results.

For example, in some embodiments of the present disclosure, the shape and size of the opening 7041 may be the same as the shape and size of the cross section of the detection groove, thereby reducing or avoiding the obstruction of the adhesive layer 704 to the flow of the sample, or reducing or avoiding the adhesion formed between the adhesive layer 704 and the reaction film 750. In some embodiments of the present disclosure, the shape of the opening 7041 may also be the same as the shape of the cross section of the detection groove, and the size of the opening 7041 is slightly smaller than the size of the cross section of the detection groove, thereby slightly increasing the contact area between the adhesive layer 704 and the first substrate 701 or the second substrate 702 to improve the adhesion between the first substrate 701 and the second substrate 702, thereby further reducing or avoiding sample leakage, and improving the sealing effect of the detection chip 70.

For example, a tip portion (for example, a top corner portion) of the opening 7041 may be set to a right angle, or may also be set to a rounded corner with a certain curvature, for example, it may be of a right angle type or a circular arc type. For example, taking the rhombus opening 7041 in FIG. 14 as an example, the four corners of the rhombus shape may be set to right angles or may be set to rounded corners with a certain arc, which is not limited in the embodiments of the present disclosure.

For example, in some examples, taking the rhombus opening 7041 in FIG. 14 as an example, two groups of opposite angles of the rhombus shape may be divided into a first group and a second group, the first group of opposite angles are set to right angles, and the second group of opposite angles are set to be of a circular arc type. For example, because the shape of the rhombus opening 7041 is basically the same as the contour shape of the detection groove of the first substrate 701, by making the first group of opposite angles circular arc shapes, the size of the rhombus opening 7041 can be slightly smaller than the size of the cross section of the detection groove, thereby increasing the contact area between the adhesive layer 704 and the first substrate 701 or the second substrate 702 to a certain extent, and improving adhering effect between the first substrate 701 and the second substrate 702. By setting the second group of opposite angles to right angles, the obstruction of the adhesive layer 704 to the flow of the sample can be reduced or avoided to a certain extent, and the adhesion between the adhesive layer 704 and the reaction film 750 can be reduced or avoided as well.

Therefore, by setting the above first group of opposite angles and the above second group of opposite angles, it is possible to reduce or avoid problems such as the adhesion layer 704 hindering the flow of the sample due to its own viscosity and the occurrence of adhesion with the reaction film 750, and it is also possible to better realize the combination between the first substrate 701 and the second substrate 702, reduce or avoid sample leakage, and improve the sealing effect of the detection chip 70.

It should be noted that in some other examples, all vertex angles of the opening 7041 may be all designed to be right angles, or all designed to be arc-shaped or of other suitable contours, and the embodiments of the present disclosure are not limited in this aspect.

It should be noted that, in the embodiment illustrated in FIG. 14, the shape and size of the opening 7041 are basically the same as the contour shape and size of the detection groove and the guiding groove of the first substrate 701, while in some other embodiments of the present disclosure, the size of the opening of the adhesive layer may also be slightly larger or smaller than the size of the detection groove or the guiding groove, or may also be set to other suitable shapes or sizes, as long as the adhesive layer can prevent or weaken the obstruction of the sample to infiltrate the reaction film and ensure the sealing effect of the detection chip, and the embodiments of the present disclosure are not limited in this aspect.

For example, as illustrated in FIG. 14, compared with the detection chip 30 illustrated in FIG. 11, the detection chip 70 adopts a sample adding protrusion 790 with a cross section in a petal-like shape, so that the contact area between the sample adding protrusion 790 and the first substrate 701 is increased, which is helpful for the stable connection between the sample adding protrusion 790 and the first substrate 701, and is more suitable for the user to hold with one hand, fix or pick up with equipment, etc.

For example, as illustrated in FIG. 14, the first substrate 701 includes a first notch 7011, and the second substrate 702 includes a second notch 7021 corresponding to the first notch 7011. In a direction perpendicular to the surface of the first substrate 701 or the second substrate 702, the first notch 7011 and the second notch 7021 are overlapped with each other. The first notch 7011 and the second notch 7021 form a limit portion (or referred to as a limit block), so that the detection chip 70 can be fixed on such as a detection device by the limit block formed by the first notch 7011 and the second notch 7021, which is convenient to detect the reaction film 750 in the detection chip 70, and the accuracy of the obtained detection data is improved. In addition, the positions of the first notch 7011 and the second notch 7021 may also be used to label and locate the plurality of detection branch structures in the detection chip 70, thereby facilitating such as the observation and recording of the detection data.

It should be noted that the sizes of the first notch 7011 and the second notch 7021 may be determined according to such as the structure of the detection device that needs to be fixed therewith, and the embodiments of the present disclosure are not limited in this aspect, as long as the detection chip 70 can be fixed on the detection device through the first notch 7011 and the second notch 7021.

For example, in the direction perpendicular to the surface of the first substrate 701 or the second substrate 702, the first notch 7011 and the second notch 7021 may be arranged between adjacent detection grooves, or other suitable positions. The embodiments of the present disclosure are not limited in this aspect.

For example, in the case that the detection chip 70 includes the adhesive layer 704 or other structural layers or functional layers, the structural layer or functional layer may also have notch structures at positions corresponding to the first notch 7011 and the second notch 7021, so that the detection chip 70 forms a limit block as a whole.

For example, in some embodiments of the present disclosure, the structures such as the sampling adding opening, the guiding channel, and the detection groove of the detection chip may also be arranged in other ways, as long as the structures such as the sampling adding opening, the guiding channel, and detection groove can be provided and realize the corresponding functions. The above embodiments are described in the case that the sample adding opening penetrates the first substrate and the guiding channel, the detection groove, and other structures are provided on the first surface of the first substrate of the detection chip, but this does not constitute a limitation of the present disclosure.

On the basis of the detection chip 30 illustrated in FIG. 11, the following will exemplify other possible installation positions of the guiding channel and the detection groove.

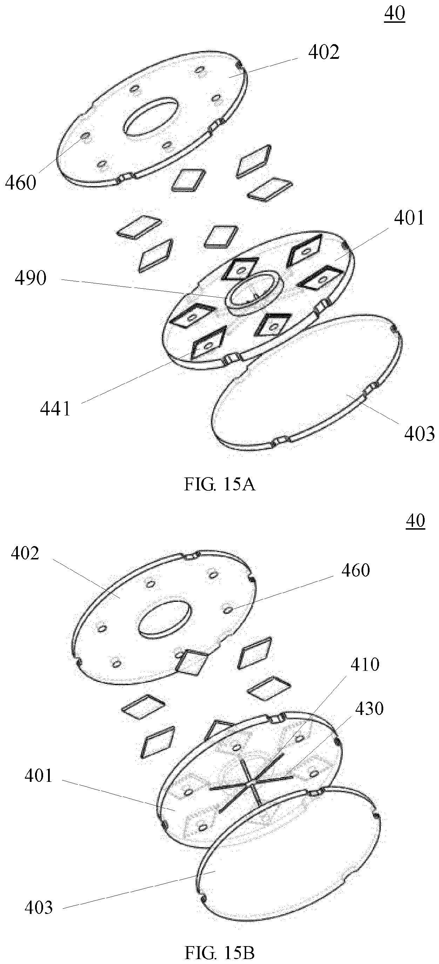

For example, FIG. 15A and FIG.15B are exploded views, that is, breakdown views, of still another detection chip provided by at least one embodiment of the present disclosure. For example, FIG. 15A is a top view of the detection chip, and FIG. 15B is a bottom view of the detection chip. It should be noted that the structures and functions of specific components in the detection chip 40 illustrated in FIG. 15A and FIG. 15B can be referred to the corresponding descriptions of the detection chip 10, the detection chip 20, or the detection chip 30 in the above embodiments, which will not be repeated here.

For example, as illustrated in FIG. 15A and FIG. 15B, the detection chip 40 includes a first substrate 401, a second substrate 402, and a third substrate 403.

For example, the first substrate 401 has a first surface (illustrated as an upper surface in the figure) and a second surface (illustrated as a lower surface in the figure) which are opposite to each other, the guiding channel 430 is formed on the second surface of the first substrate 401, and the detection groove 441 is formed on the first surface of the first substrate 401. The second substrate 402 is stacked on the first surface of the first substrate 401 and has a detection through hole 460 at a position corresponding to the detection groove 441 to allow optical detection to be performed. The third substrate 403 is stacked on the second surface of the first substrate 401 to seal the guiding channel 430 and the sample adding opening 410, so that the sample can flow into the guiding channel 430 from the sample adding opening 410.

For example, the sample adding opening 410 is a through hole penetrating the first substrate 401, and the second substrate 402 has a through hole exposing the sample adding opening 410, so that the sample can be injected into the sample adding opening 410, and the sample adding protrusion 490 may extend from the second substrate 402 to facilitate such as the picking and placing of the detection chip 40.

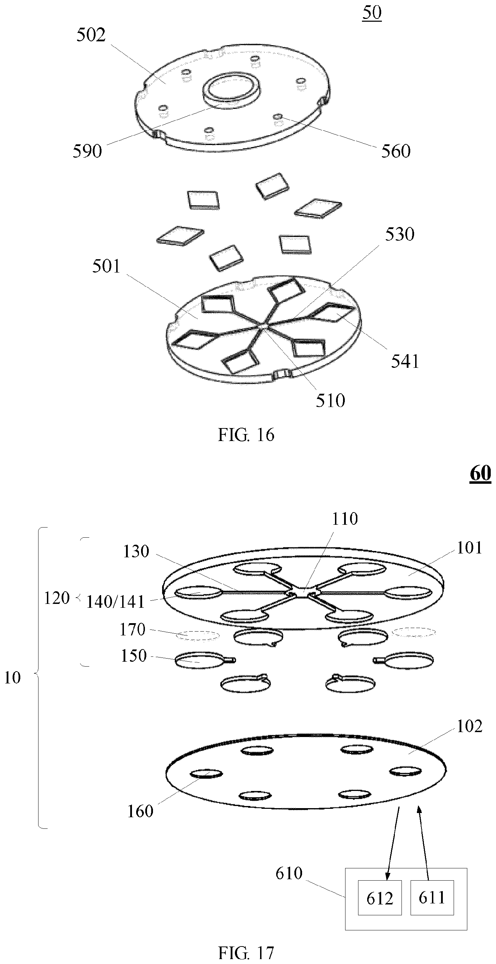

For example, FIG. 16 is an exploded view, that is, a breakdown view, of still another detection chip provided by at least one embodiment of the present disclosure. For example, FIG. 16 is a top view of the detection chip. It should be noted that the structures and functions of specific components in the detection chip 50 illustrated in FIG. 16 may refer to the corresponding descriptions of the detection chip 10, the detection chip 20, or the detection chip 30 in the above embodiments, which will not be repeated here.

For example, as illustrated in FIG. 16, the detection chip 50 includes a first substrate 501 and a second substrate 502. The first substrate 501 has a first surface (illustrated as an upper surface in the figure) and a second surface (illustrated as a lower surface in the figure) which are opposite to each other, the guiding channel 530 and the detection groove 541 are formed on the first surface of the first substrate 501, and the second substrate 502 is stacked on the first surface of the first substrate 501 and has a detection through hole 560 at a position corresponding to the detection groove 541 to allow optical detection to be performed.

For example, the sample adding opening 510 is an opening in the first substrate 501. The opening is, for example, a non-through hole that does not penetrate the first substrate 501. In this case, the height (or depth) of the sample adding opening 510 is smaller than the thickness of the first substrate 501. The second substrate 502 has a through hole exposing the sample adding opening 510 and a sample adding protrusion 590, so that the sample can be injected into the sample adding opening 510 through the sample adding protrusion 590, and the sample adding protrusion 590 facilitates such as the picking and placing of the detection chip 50.

At least one embodiment of the present disclosure further provides a detection system. The detection system includes: a detection device and the detection chip provided by any one of the embodiments of the present disclosure, such as the detection chip 10, the detection chip 20, the detection chip 30, the detection chip 40, or the detection chip 50 in the above embodiments, and the detection device is configured to detect the reaction film in the detection groove through the detection portion of the detection chip.

For example, taking the detection chip 10 in the above embodiments as an example, FIG. 17 is a schematic diagram of a detection system provided by at least one embodiment of the present disclosure.

For example, as illustrated in FIG. 17, the detection system 60 includes a detection chip 10 and a detection device 610, and the detection device 610 is configured to detect the reaction reagent, such as the reaction film 150, in the detection groove 141 through the detection portion 140 of the detection chip 10.

For example, the detection device 610 includes a light source 611 and a photoelectric detection device 612. The light source 611 is configured to emit light to the reaction film 150, and the photoelectric detection device 612 is configured to receive light emitted from the light source 611 and reflected by the reaction film 150.

For example, the photoelectric detection device 612 can compare the intensity of the light reflected by the reaction film 150 with the intensity of the light emitted by the light source 611, so as to determine the presence or absence and concentration of the object to be detected in the sample according to the value of the detected absorbance of the reaction film 150, thereby achieving the detection of sample indexes. For example, taking the pre-titrated detection reagent in the reaction film 150 as a color reagent as an example, when the detection result is obtained, the darker the color that appears on the reaction film 150, the higher the content of the analyte in the detected sample, and correspondingly, the value of the absorbance of the reaction film 150 detected by the photoelectric detection device 612 is larger.

For example, in some embodiments, the photoelectric detection device 612 may be a photodiode. The photodiode can convert the received optical signal into an electrical signal, and determine the intensity of the received light according to the change of the electric parameter (for example, the change of the current, etc.) in the electrical signal, so as to determine the value of the absorbance of the reaction film 150.

Specific descriptions and technical effects of the detection system provided by the embodiments of the present disclosure may refer to the corresponding contents of the detection chip provided in the embodiments of the present disclosure, for example, may refer to the corresponding content of the detection chip 10, the detection chip 20, the detection chip 30, the detection chip 40, or the detection chip 50 in the above embodiments, which will not be repeated here.

For the present disclosure, the following statements should be noted:
(1) The accompanying drawings related to the embodiment(s) of the present disclosure involve only the structure(s) in connection with the embodiment(s) of the present disclosure, and other structure(s) can be referred to common design(s).
(2) For the purpose of clarity, in accompanying drawings for illustrating the embodiment(s) of the present disclosure, the thickness of a layer or a region may be enlarged or narrowed, that is, the drawings are not drawn in a real scale. It should be understood that, in the case where a component such as a layer, a film, a region, a substrate, or the like is referred to be "on" or "under" another component, the component may be "directly" "on" or "under" the another component, or an intermediate component may be disposed therebetween.
(3) In case of no conflict, features in one embodiment or in different embodiments can be combined to obtain new embodiments.

What have been described above merely are specific implementations of the present disclosure, and the protection scope of the present disclosure is not limited thereto. The protection scope of the present disclosure should be based on the protection scope of the claims.

## Claims

1. A detection chip, comprising:
a sample adding opening; and
at least one detection branch structure, wherein each of the at least one detection branch structure comprises:
a detection portion, comprising a detection groove and a reaction reagent,
wherein the detection groove is in connection with the sample adding opening, and the reaction reagent is contained in the detection groove; and
the detection portion is configured to allow optical detection to be performed on the reaction reagent in the detection groove.

2. The detection chip according to claim 1, wherein each of the at least one detection branch structure further comprises a guiding channel,
the guiding channel comprises a first end and a second end, the first end of the guiding channel is in connection with the sampling adding opening, and the second end of the guiding channel is in connection with the detection groove, so as to allow the detection groove to be in connection with the sample adding opening through the guiding channel.

3. The detection chip according to claim 2, further comprising:
a first substrate, comprising a first surface, wherein the sample adding opening is a through hole in the first substrate, and the guiding channel and the detection groove are provided on the first surface of the first substrate; and
a second substrate, being stacked on the first surface of the first substrate and allowing the optical detection to be performed at a position corresponding to the detection groove.

4. The detection chip according to claim 3, wherein each of the at least one detection branch structure further comprises a water-absorbing film, and
the water-absorbing film is contained in the detection groove and at least partially overlaps with the reaction reagent in a direction perpendicular to the first substrate.

5. The detection chip according to claim 4, wherein the water-absorbing film is provided on a side of the reaction reagent away from the second substrate.

6. The detection chip according to claim 4 or 5, wherein a liquid storage capacity of the water-absorbing film is 10µL∼50µL.

7. The detection chip according to any one of claims 2-6, wherein the detection portion further comprises a guiding groove at a periphery of the detection groove, and the guiding groove is in connection with the detection groove; and
a height of at least a part of the guiding groove is smaller than a height of the detection groove.

8. The detection chip according to claim 7, wherein the guiding groove comprises a guiding wall in a sloped shape, and
one end of the guiding wall is in contact with a side surface of the detection groove.

9. The detection chip according to claim 7, wherein a longitudinal section of the guiding groove and a longitudinal section of the detection groove are in a stepped shape as a whole.

10. The detection chip according to any one of claims 7-9, wherein the guiding groove at least partially surrounds the detection groove.

11. The detection chip according to any one of claims 7-10, wherein a height of the detection groove is 0.2mm∼5mm, a difference between a maximum height of the guiding groove and a height of the detection groove is 0.1mm∼1mm, and a width of the guiding groove is 0.1mm∼1mm.

12. The detection chip according to any one of claims 3-6, wherein the detection portion further comprises a liquid storage through hole, and the liquid storage through hole penetrates the first substrate and is in connection with the detection groove.

13. The detection chip according to claim 12, wherein the liquid storage through hole is in connection with a center of the detection groove.

14. The detection chip according to claim 12 or 13, wherein a diameter of the liquid storage through hole is 0.2mm∼5mm, and a ratio of a depth of the liquid storage through hole to a height of the detection groove is 0.5:1-10:1.

15. The detection chip according to any one of claims 2-14, wherein a height of the guiding channel is 0. 1mm∼1.5mm, and a width of the guiding channel is 0.1mm∼2mm.

16. The detection chip according to any one of claims 2-15, wherein a ratio of a height of the guiding channel to a width of the guiding channel is 1:1∼10:1.

17. The detection chip according to any one of claims 2-16, wherein an inner wall of the guiding channel is hydrophilic.

18. The detection chip according to any one of claims 2-17, wherein the at least one detection branch structure comprises a plurality of detection branch structures, and the plurality of detection branch structures are uniformly distributed along a periphery of the sample adding opening.

19. The detection chip according to any one of claims 2-18, wherein the sample adding opening comprises a first main body and a first protrusion protruding from the first main body towards the guiding channel, and the first protrusion is in connection with the guiding channel.

20. The detection chip according to claim 19, wherein a diameter of the first main body is 1mm∼10mm.

21. The detection chip according to any one of claims 2-20, wherein the reaction reagent comprises a reaction film and/or a block-shaped reaction reagent.

22. The detection chip according to claim 21, wherein the reaction film is in a compressed state in a thickness direction.

23. The detection chip according to claim 22, wherein a ratio of a thickness of the reaction film in a relaxed state to a height of the detection groove is 1:1∼1:0.5.

24. The detection chip according to any one of claims 21-23, wherein the reaction film is in a circle shape, or
the reaction film is in a polygonal shape, and one corner of the polygonal shape is directly connected with the second end of the guiding channel.

25. The detection chip according to any one of claims 21-23, wherein the reaction film comprises a film main body and a second protrusion protruding from the film main body towards the guiding channel, and at least a part of the second protrusion is in the guiding channel; and
a shape of the film main body and a shape of the detection groove are identical, and the film main body and the detection groove are in a circle shape.

26. The detection chip according to any one of claims 21-23, wherein the reaction film is in a rhombus shape.

27. The detection chip according to claim 24, wherein a diameter of the detection groove is 3mm∼15mm, and a diameter of the reaction film is equal to or smaller than the diameter of the detection groove.

28. The detection chip according to any one of claims 3-6 and 12-14, wherein the second substrate has a detection through hole at a position corresponding to the detection groove.

29. The detection chip according to claim 28, wherein the second substrate is opaque; or
the detection chip further comprises a light-shielding layer, and the light-shielding layer covers a surface of the second substrate away from and/or close to the first substrate and exposes the detection through hole.

30. The detection chip according to claim 28 or 29, wherein a diameter of the detection through hole is 2mm∼10mm.

31. The detection chip according to any one of claims 3-6, 12-14 and 28-30, wherein a material of the first substrate comprises one or more of polymethyl methacrylate, polystyrene, and polycarbonate.

32. The detection chip according to any one of claims 3-6, 12-14 and 28-31, wherein a material of the second substrate comprises one or more of polymethyl methacrylate, polystyrene, polycarbonate, and polyethylene terephthalate.

33. The detection chip according to any one of claims 3-6, 12-14 and 28-32, wherein the first substrate and the second substrate are combined by bonding, welding, adhering, or clamping.

34. The detection chip according to claim 33, further comprising an adhering layer,
wherein the adhering layer is between the first substrate and the second substrate, and is configured to combine the first substrate and the second substrate, and
the adhering layer comprises an opening corresponding to the detection groove.

35. The detection chip according to any one of claims 2-34, wherein the reaction reagent comprises a matrix material and a detection reagent distributed in the matrix material, and
the matrix material comprises a glass fiber, a cotton fiber, or a composite fiber of the glass fiber and the cotton fiber.

36. The detection chip according to claim 2, further comprising:
a first substrate, comprising a first surface, wherein the sample adding opening is a through hole in the first substrate, and the guiding channel and the detection groove are provided on the first surface of the first substrate; and
a second substrate, being stacked on the first surface of the first substrate and comprising a detection through hole at a position corresponding to the detection groove to allow the optical detection to be performed through the detection through hole,
wherein the at least one detection branch structure comprises a plurality of detection branch structures, and the plurality of detection branch structures are uniformly distributed along a periphery of the sample adding opening.

37. The detection chip according to claim 2, further comprising:
a first substrate, comprising a first surface and a second surface which are opposite to each other, wherein the sample adding opening is a through hole in the first substrate, the detection groove is provided on the first surface of the first substrate, and the guiding channel is provided on the second surface of the first substrate;
a second substrate, being stacked on the first surface of the first substrate and allowing the optical detection to be performed at a position corresponding to the detection groove; and
a third substrate, being stacked on the second surface of the first substrate and sealing the sample adding opening and the guiding channel.

38. The detection chip according to claim 2, further comprising:
a first substrate, comprising a first surface, wherein the sample adding opening, the guiding channel, and the detection groove are provided on the first surface of the first substrate, and the sample adding opening is a non-through hole in the first substrate; and
a second substrate, wherein the second substrate is stacked on the first surface of the first substrate, exposes the sample adding opening, and allows the optical detection to be performed at a position corresponding to the detection groove.

39. The detection chip according to any one of claims 2-38, further comprising an optical calibration branch structure,
wherein the optical calibration branch structure comprises an optical path detection region, and the optical path detection region is configured to perform optical calibration.

40. The detection chip according to any one of claims 3-6, 12-14 and 28-34, further comprising a sample adding protrusion,
wherein the sample adding protrusion protrudes from the first surface of the first substrate in a direction away from the second substrate, and
one end of the sample adding protrusion is connected with the sample adding opening.

41. The detection chip according to claim 40, wherein the sample adding protrusion comprises a conical cavity,
a volume of the conical cavity is 50µL∼200µL, and a height of the conical cavity protruding from the first substrate is 1mm∼20mm; and
the conical cavity comprises a first end and a second end which are opposite to each other, the first end is connected with the sample adding opening, a diameter of the first end is 0.5mm∼5mm, and a diameter of the second end is 1mm∼20mm.

42. The detection chip according to any one of claims 3-6, 12-14, 28-34, 40 and 41, wherein the first substrate comprises a first notch, the second substrate comprises a second notch corresponding to the first notch, and the first notch and the second notch are configured to fix the detection chip.

43. A detection system, comprising:
the detection chip according to any one of claims 1-42, and
a detection device, configured to detect the reaction reagent in the detection groove through the detection portion.

44. The detection system according to claim 43, wherein the detection device comprises:
a light source, configured to emit light to the reaction reagent, and
a photoelectric detection device, configured to receive light emitted from the light source and reflected by the reaction reagent.
